# EUROPEAN PATENT APPLICATION

(11) **EP 1 321 875 A1**
(43) Date of publication of application: **25.06.2003**
(21) Application number: 02028727.2
(22) Date of filing: 20.12.2002
(51) Int. Cl.: G06F 17/60

(54) **Commodity order acceptance and transportation system, method and recording medium**

(30) Priority: 20.12.2001 JP 2001387776; 20.12.2001 JP 2001387798
(71) Applicant: Ricoh Company, Ltd., Tokyo 143-8555 (JP)
(72) Inventor: Mori, Hideyuki, Tokyo 143-8555 (JP); Nakamura, Kiyokazu, Tokyo 143-8555 (JP); Itoh, Kenji, Tokyo 143-8555 (JP)
(74) Representative: Schwabe - Sandmair - Marx

(57) **Abstract**

An administrator of a system 10 sells an own company's or another company's commodity to a user via a facsimile, telephone, and electronic mail in order to deal with another company's commodity and support and correspond to diversifying customer purchase needs without suffering from inventory. A user information storage device 14 is provided so as to store an amount of payment for a commodity and support, which is determined by a user and dealer, together with user information. A buying-in information storage device 15 is provided so as to store a buying-in price of the commodity and support from a provider thereof. A reception device 11 is provided so as to receive purchase request information from a user 1. A reception processing device 13 is provided so as to consolidate the purchase request information and perform an order acceptance process in accordance with the purchase request information. A commodity transportation instruction device 16 refers to various information stored in the user and buying-in information storage devices 14 and 15 in accordance with the order acceptance process, and instruct the provider to either transport the commodity or provide the support. The provider acts on the instruction by executing transportation or provision to the user 1. The administrator manages and sells an own company's commodity.

## Description

### CROSS REFERRENCE TO A RELATED APPLICATION

This application claims priority under 35 USC §119 to Japanese Patent Application Nos. 2001-387776, and 2001-387798 both filed on December 20, 2001, the entire contents of which are herein incorporated by reference.

### BACKGROUND OF THE INVENTION

### 1.Field of the Invention:

This invention relates to a system, method, program, and recording medium for accepting an order and transporting a commodity.

### 2. Discussion of the Background art:

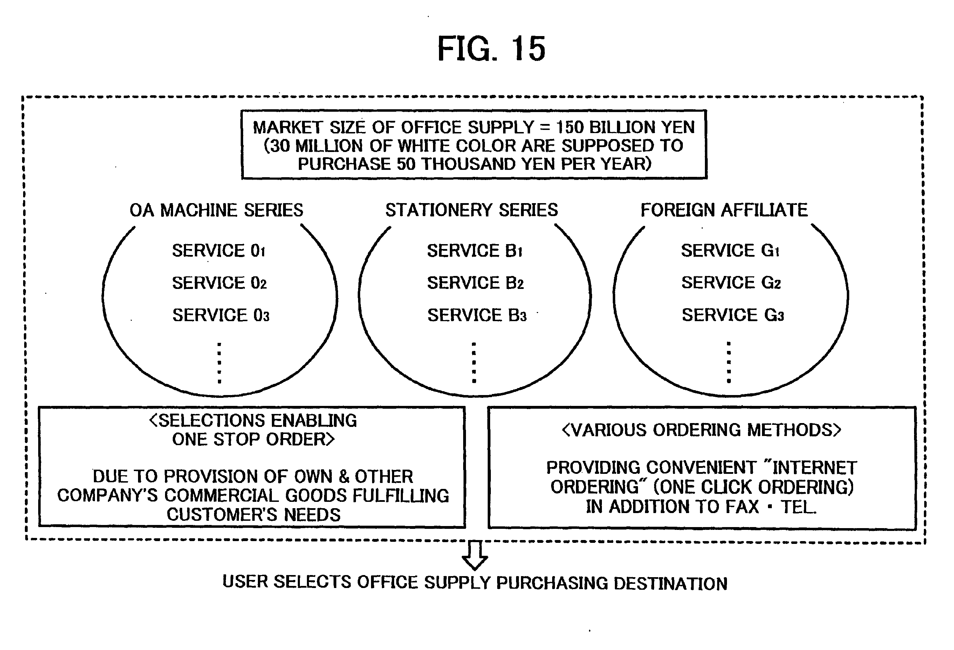

In a recent office consumable item environment, in order to satisfy increasingly diversifying purchase needs (e.g. one stop order, short delivery time), an OA (Office Automation) , writing material, and foreign affiliate groups have entered into a mail order market; and such competition is increasingly intensified as illustrated in Fig. 15. Accompanying that, a customer site comes to select an office consumable item-purchasing destination. A sales scale of the entire market entry business enterprises indicates scaling up tendency due to assortment allowing a one stop order, and provision of own or another company's commodities capable of satisfying customer's needs. In addition, there exist variety of ordering methods. That is, a convenient Internet order (one click order) is provided in addition to a facsimile and telephone. A mail order service utilizing spreading Internet allows a consumer, who desires to purchase a commodity, to access commodity information displayed on a Home Page of the Internet, and to pick out a desired commodity among the commodity information.

As to an actual condition of a mail order service in the writing material business group, each company gets in operation by locating an own business as a surrogate business (distributive trade) for a customer.
Specifically, each company introduces an operation with a medium/major company, small scale company, and individual enterpriser. As for a selling method, a brochure is prepared, and a fixed price is displayed on the brochure. A practical sales price is determined through a negotiation with a service assistant (SA) per a customer, and a commodity is sold by the sales price, or an order is waited for. Further, a method is available in that a discounted OFF price is displayed as a sales price and an order can be waited. In such an environment, acceptance of orders using the Internet amounts from 15 to 30% of the total sales.

At practical sales, it is determined that at least 10,000 Yen is necessary per an order for a unit cost, and thereby decreasing in a profit rate is prevented. Further, in addition to writing material, OA consumable items of PC series, such as toner, paper, etc., office electronic appliance, office furniture, and daily commodity or the like are also sold.

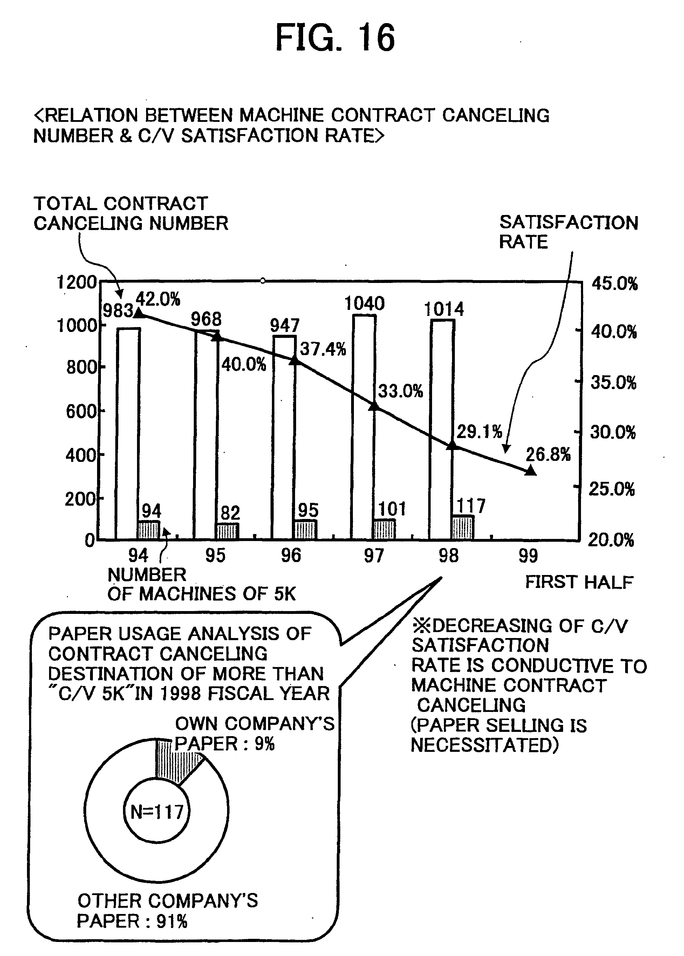

Fig. 16 is a chart illustrating a relation between a number of machines, which has been sold by an OA instrument dealer and whose agreement is cancelled, and a C/V satisfactory rate. When looking at a current condition of the OA instrument dealer, as the C/V satisfactory rate decreases, a number of cancellations increases.
Thus, it stands out in relief that paper sales are essential. Then, in order to increase in the C/V satisfactory rate and attempt to keep capturing an own company's customer, alliance with a paper dealer is necessitated.

For the reasons why a consumer of a major company practically accepts such a sales, cheapness, simplicity of an ordering method (i.e., easy retrieval, facsimile) , a next day delivery, and anytime available order are exemplified. In addition to those, one stop ordering is exemplified for consumers of small and individual companies. A small-scale customer purchases the entire commodities by one stop (ordering). However, a large-scale customer of some level separately uses an ordering destination in accordance with a commodity. As complaints and demands from consumers, poorness of prompt response, transportation, and assortment of commodities per a category, and delivery incidental service, such as collection of used commodity, collection of packing material after unpacking, delivery to a designated shelf, etc., are exemplified.

Specifically, purchase needs of customers have the inclination to diversify as described below. Specifically, short delivery time, one stop order (i.e., reduction of procurance cost), etc., of various manufacturer's consumable items, a moderate purchase price, detailed delivery accessory service, variation of ordering manners (simple ordering method) from a telephone to facsimile or Web, and purchasing and collection of recycle goods due to enhancement of environment consciousness are sought.

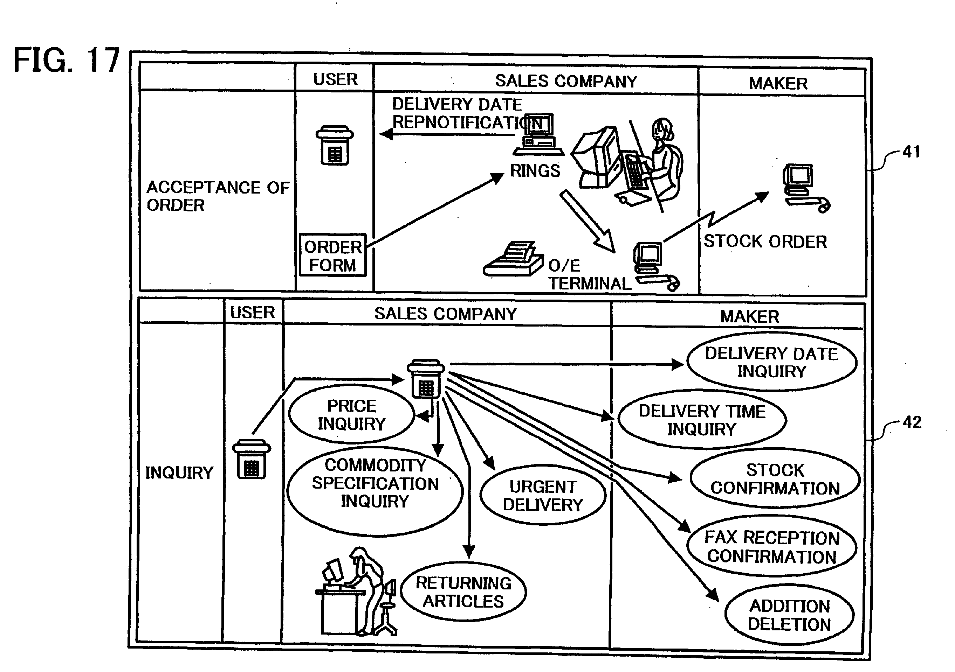

Fig. 17 is a chart illustrating a mail order sales system not using Internet as a main channel. A manufacturer (or vender) employs the mail order sales system not using Internet as a main channel using a sales company or own sales person. When an order is placed with an order form by a user via a telephone or facsimile with regard to an order acceptance No. 41, it is transmitted to a backbone operation system of the vender (inscribed on the face as RNGS in Fig. 17). The backbone operation system informs a user of delivery date. The backbone operation system transmits order acceptance information to a terminal of an O/E system. An O/E terminal places an order of inventory to a central office. When an inquiry as to an inquiry No. 42 is sent from a user, and when a price and commodity specification are inquired, and when article returning and urgent transportation requests or the like are made, a sales company responds thereto. When inquiries about a delivery date of a commodity and transportation time, inventory confirmation, requests for addition and cancellation of a commodity, and an inquiry about reception of a facsimile are made, a manufacturing company (i.e., a central office) of the commodity corresponds thereto.

Further, since needs of a customer for a commodity (orproduct) and support (i.e., service) are diversified even a manufacturer in confident in an own company's commodity and support can not satisfy a customer if relying only on the own company's commodity and support. Further, when a commodity and support discounted or given an addition point for discount are provided, a consumer generally misunderstands if an actual price is not displayed to readily understand.

### SUMMARY

Accordingly, an object of the present invention is to provide a new commodity order and acceptance system which is contituted to reduce processing time and the time between in-going and out-going informations (request, invoices, instructions, etc). Furthermore, the processing load for individual devices is preferably diversified in order to reduce the hardware requirements for the system of the present invention. The above and other objects are achieved according- to the present invention by providing a novel commodity order acceptance and transportation system, that includes: a reception device configured to receive purchase request information including user information, commodity ordering information and/or support requesting information, said commodity ordering information transmitted from any one of facsimile, telephone, and electronic mail; an order acceptance processing device configured to consolidate purchase request information received by the reception device and process an accepted order in accordance with the purchase request information; a buying-in information storage device configured to store a buying-in price of a commodity and support bought-in from a provider thereof; a user information storage device configured to store an amount of payment for a commodity and support determined by a user and a dealer together with personal information of a user; a commodity transportation instructing device configured to refer to information stored in the buying-in information storage device and user information storage device in accordance with an order reception process performed by the-order acceptance processing device, said a commodity transportation instructing device instructing the provider to transport a commodity or provide support included in the purchase request information; and an invoicing device configured to invoice payments for the commodity and/or support included in the purchase request information to the user and/or dealer in accordance with the amounts of payment for the commodity and/or support stored in the user information storage device and the personal information of the user.

In another embodiment, a Web reception device configured to receive purchase request information including user information, commodity ordering information, and/or support request information, said purchase request information being transmitted from a user to a Web server via Internet and a user information storage device configured to store amount of payments for a commodity and/or support received by the reception device together with personal information of a user, said amount of payments being determined by a user and dealer, said user information storage device storing amount of payments for a commodity and/or support received by the Web reception device together with personal information of a user, said amount of payments being determined by a user and dealer;

In yet another embodiment, a buying-in price changing device is provided so as to change a buying-in price of a commodity and/or support stored in the buying-in information storage device in accordance with a result of compiling payment amounts for the commodities and/or supports stored in the user information storage device.

In yet another embodiment, a buying-in price changing device is provided so as to change a buying-in price of a commodity and/or support stored in the buying-in information storage device in accordance with a number of items of the commodity and/or a frequency of support stored in the user information storage device.

In yet another embodiment, a buying-in price changing device is provided so as to change a buying-in price of a commodity and/or support stored in the buying-in information storage device in accordance with an amount of payment for a commodity and/or support per a user.

In yet another embodiment, a buying-in price notifying device is provided so as to notify a buying-in price changed by the buying-in price changing device, said buying-in price notifying device being included in a terminal apparatus of the provider. The terminal apparatus is connected to the commodity order acceptance and transportation system via a network.

In yet another embodiment, a buying-in price confirmation device is provided so as to allow to confirm a change in a buying-in price, said buying-in price confirmation device being included in a terminal apparatus of the provider.

In yet another embodiment, a buying-in price confirmation device is provided so as to quote and allow to confirm a buying-in price stored in the buying-in information storage device. The buying-in price confirmation device is included in a terminal apparatus of the provider, and the terminal apparatus is connected to the commodity order acceptance and transportation system via a network.

In yet another embodiment, one of providers administrates a commodity order acceptance and transportation system that includes an inventory information storage device configured to store inventory information related to a commodity and/or schedule information related to support manpower; an inventory confirmation device configured to confirm a feasibility of provision of an ordered commodity and/or support in accordance with the information stored in the inventory information storage device; a transportation date determining device configured to determine a transportation date of a commodity included in the purchase request information in accordance with a result of the confirmation of inventory and the purchase request information; and an order acceptance confirmation information transmitting device configured to automatically transmit the transportation date determined by the purchase request information and the transportation date determining device to a user as order acceptance acknowledge using a facsimile or electronic mail. The commodity transportation instruction device instructs to transport the commodity on the date.

In yet another embodiment, an amount of payment stored in the user information storage device is set to a commodity and/or support highly frequently purchased per a user.

In yet another embodiment, a brochure creating device configured to create a purchase requesting form and brochure in accordance with an amount of payment and personal information stored in the user information storage device; and a brochure providing device configured to provide the purchase requesting form and brochure to a user.

The method steps described herein and in particular shown in flow charts are preferably implemented on a computer or computer system by corresponding program steps. The devices described herein may be implemented by hardware and software and may exchange the information electronically.

The sequence of steps and the described decisions are in particular performed automatically.

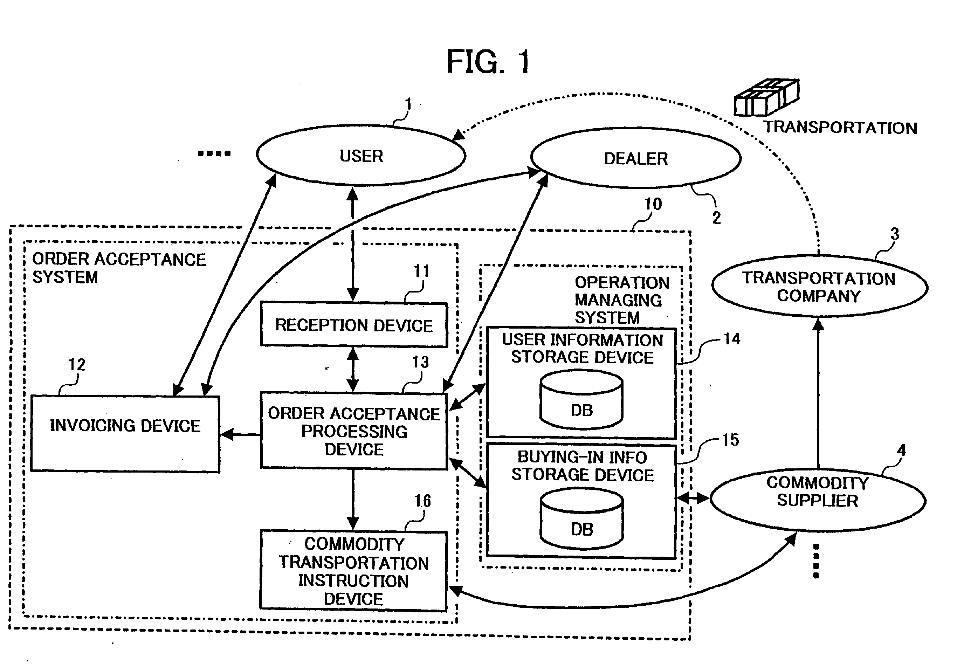

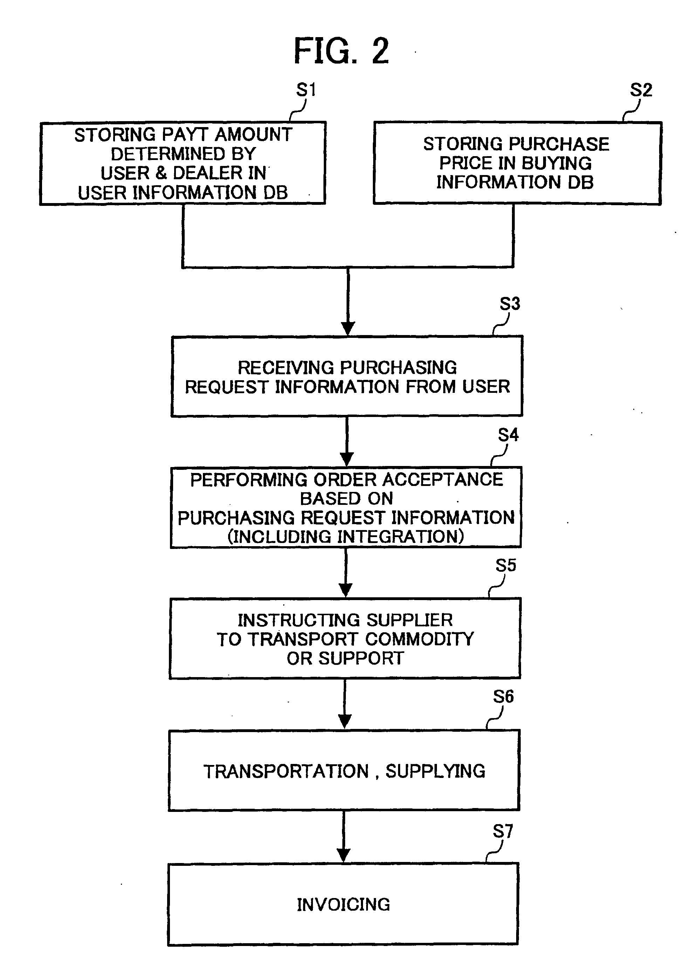

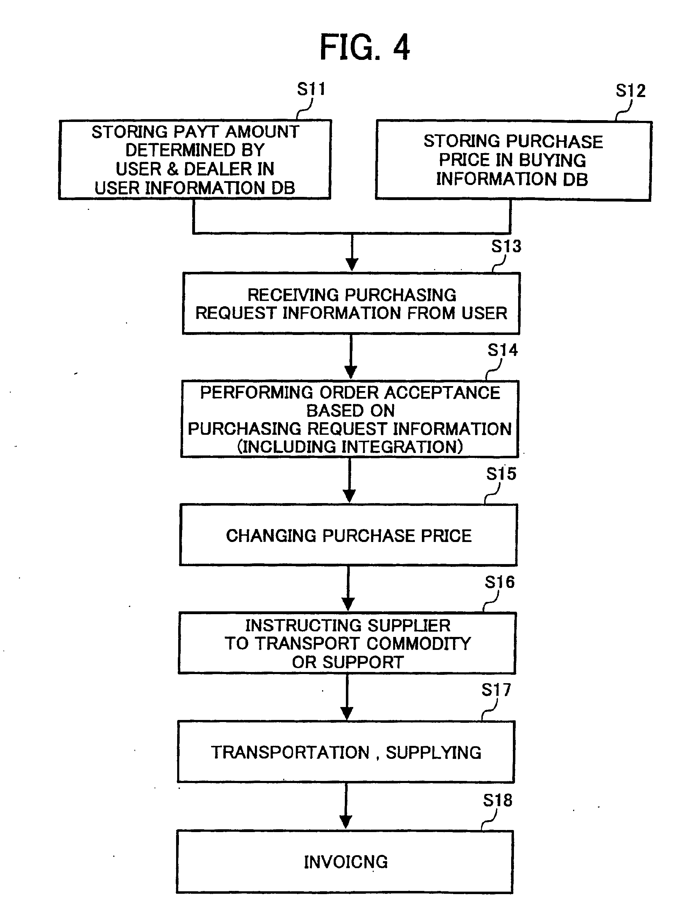

Preferably, in accordance with the invention the processing device, in particular the order acceptance processing device (see e.g. figures 1, 3, 5, 7, 9, 10 and figures 18, 20, 22, 24) are arranged centrally, i.e. exchange in particular information with at least one of the following devices: reception device, user information storage device, stock information storage device, purchase price changing device, dealer (i.e. dealer information exchanging device), web reception device, buying-in info storage device. Additionally or alternatively to the afore-mentioned direct exchange, the order acceptance processing device is arranged to directly send information to at least one of the following devices: invoicing device, commodity transportation instruction device, order acceptance confirmation information transmitting device etc. The afore-mentioned central arrangement advantageously reduces the processing time and processing load since in particular for the claimed consolidation (e.g. information linking), different informations are obtained from different information resources (in particular a plurality of devices, e.g. dealer, user information storage device, buying-in information storage device, stock information storage device). Due to the central arrangement, those informations may be linked (see flow diagrams, e.g. figure 2, 4, etc.). This central linking of information results in performing only one acceptance step (e.g. performing order acceptance step S4) while otherwise a sequence of steps would be necessary in order to come to a final conclusion i.e. acceptance or non-acceptance. In this way, the hardware on which the system is implemented is more effectively used and processing time is reduced.

Furthermore, advantageously, the system of the present invention is structured in an order acceptance system (subsystem) and a operation managing system (subsystem). This separation of this system into subsystems allows to reduce the processing load for the centrally arranged order acceptance processing device. In particular, information from the commercial goods supplier is handled by the operation managing system without obligatory bothering the centrally arranged device with the information of the commercial goods supplier. This allows for a straight forward processing flow in the centrally arranged device reducing the risk of interfering program steps and increasing the reliability of the overall system while reducing the risk of a computer system break-down. Furthermore, by using the operation managing system as a buffer for information received from the commercial good supplier the operation load for the centrally arranged device is reduced and the process activity is increased.

Preferably, the purchase price changing device is arranged as shown in the figures, i.e. the device is a part of the operating managing system. In this way, a further ease of burden on the order acceptation processing device is achieved. The pre-processing of data from the user information storage device and stock information storage device by the purchase price changing device (e.g. in a separate subprogram or by a separately provided processor) increases the reliability of the running system. The operation managing system in particular comprises a time base which allows to store the time and date of previous incoming and/or outgoing information (requests, invoices etc.). Preferably, the purchase price changing device calculates based on time data and the amount of payment, amount of particular commodities etc. an average amount (of price or commodities) per unit time for each user (e.g. the bought amount per a fixed interval like a year or a month). This preprocessed information is provided to the centrally arranged processing device for further processing. Preferably, any kind of mathematical algorithm which relies on information from the time base, operating managing system, and/or e.g. buying-in info storage device, stock information storage device, etc. is used to calculate a value (price) which is submitted to the centrally arranged device (i.e. order acceptance processing device).

The above described arrangement of devices which may be implemented in hardware or by a corresponding program structure results in an effective processing which reduces processing time and increases reliability of the overall system, i.e. reduces risk of system break down.

### BRIEF DESCRIPTION OF DRAWINGS:

A more complete appreciation of the present invention and many of the attendant advantages thereof will be readily obtained as the same becomes better understood by reference to the following detailed description when considered in connection with the accompanying drawings, wherein:
Fig. 1 is a chart illustrating a configuration of a commodity order acceptance and transportation system as one embodiment according to the present invention;
Fig. 2 is a flowchart illustrating a method of accepting and transporting a commodity order executed in the system of Fig. 1;
Fig. 3 is a chart illustrating another embodiment of a configuration of a commodity order acceptance and transportation system according to the present invention;
Fig. 4 is a flowchart illustrating a method of accepting and transporting a commodity order executed in the system of Fig. 3;
Fig. 5 is a chart illustrating still another embodiment of a configuration of a commodity order acceptance and transportation system according to the present invention;
Fig. 6 is a flowchart illustrating a method of accepting and transporting a commodity order executed in the system of Fig. 5;
Fig. 7 is a chart illustrating still another embodiment of a commodity order acceptance and transportation system according to the present invention;
Fig. 8 is a flowchart illustrating a method of accepting and transporting a commodity order executed in the system of Fig. 7;
Fig. 9 is a chart illustrating still another embodiment of a commodity order acceptance and transportation system according to the present invention;
Fig. 10 is a chart illustrating still another embodiment of a commodity order acceptance and transportation system according to the present invention;
Fig. 11A and 11B are charts collectively illustrating one embodiment of a commodity order acceptance and transportation system according to the present invention;
Figs. 12A and 12B are flowcharts collectively illustrating a procedure starting from membership registration to commodity transportation performed in the embodiment of Fig. 11;
Figs. 13A. 13B, 13C, and 13D are charts collectively illustrating one example of a usage requesting form for an ODeS;
Figs. 14A, 14B, and 14C are charts collectively illustrating one example of an order sheet for the ODeS;
Fig. 15 is a chart illustrating environment of office consumable items;
Fig. 16 is a chart illustrating a relation between a number of cancelled machine contracts with an OA instrument dealer and a C/V satisfactory rate;
Fig. 17 is a chart illustrating a mail order servicing method that does not employ Internet as a main channel
Figs. 18A and 18B are charts collectively illustrating a commodity order acceptance and transportation system as another embodiment according to the present invention;
Fig. 19 is a flowchart illustrating a method of accepting and transporting a commodity order executed in the system of Fig. 18;
Figs. 20A and 20B are charts collectively illustrating still another embodiment of a configuration of a commodity order acceptance and transportation system according to the present invention;
Fig. 21 is a flowchart illustrating a method of accepting and transporting a commodity order executed in the system of Fig. 20;
Figs. 22A and 22b are charts collectively illustrating still another embodiment of a commodity order acceptance and transportation system according to the present invention;
Figs. 23A and 23B are flowcharts collectively illustrating a method of accepting and transporting a commodity order executed in the system of Fig. 22;
Figs. 24A and 24B are charts collectively illustrating still another embodiment of a commodity order acceptance and transportation system according to the present invention;
Fig. 25 is a flowchart illustrating a method of accepting and transporting a commodity order executed in the system of Fig. 24; and
Figs. 26A and 26B are charts collectively illustrating a payment amount offering device included in the system of Fig. 25.

### PREFERRED EMBODIMENT OF THE PRESENT INVENTION;

Fig. 1 is a chart illustrating a construction of a commodity order acceptance and transportation system as one example according to the present invention. Fig. 2 is a flowchart illustrating a commodity order acceptance and transportation method of the system of Fig. 1. The commodity order acceptance and transportation system 10 (hereinafter referred to as a current system) is a system that allows an administrator (e.g. a manufacturer) to sell own and another company's commodities to a user 1 via any one of facsimile, telephone, and electronic mail. The current system is a system of the invention disclosed in Japanese Patent Application No. 2000-374376 filed by this applicant and is capable of providing not only an own company's but also another company's commodities and supports to a user 1. A system that handles only the another company's commodity and support and not own is initially described in the current embodiment. However, a feature in which both the another and own company's commodities and supports are handled can be adopted as mentioned later. The current system is premised to include a reception device 11, an invoicing device 12, an order acceptance device 13, a commodity transportation instruction device 16, a user information storage device 14, and a buying-in information storage device 15. For the sake of simplicity, respective devices 11, 12, 13, and 16 are described as devices included in an order acceptance system. Respective devices 14 and 15 are described as devices included in an operation administration system.

Further, each of devices except for the reception device 11 and a portion of a later described brochure providing device (e. g. a mailing device in a case when a brochure is mailed) can be operated by a computer in this specification. In such a situation, as a device for those, a program operating the computer can be stored in a server apparatus and executed. The server apparatus and various databases (DBs) stored in a later described storage device can employ configurations such that the DBs are either physically included in the server apparatus or separated by being connected thereto via a network. Further, each of the DBs can be separated or integrated.
In short, every type of configuration is allowable if functions of theses DBs can be exerted. A configuration of the server apparatus can be a computer including a server function having a hierarchical structure, such as a server for network connection use (e.g. a Web server when a later described Internet connection is needed) , an authentication server for authenticating each user, a database administration server for administrating various databases, etc. Practically, a computer is enough as far as storing a program executing functions of later described respective devices. This program preferably includes a graphical user interface so as to enable a user to readily use the respective devices. Further, a transportation instruction to a provider 4 is preferably executed to a client apparatus of the provider 4 via the network. Also, processing of a dealer 2 is preferably executed from a client of the dealer 2 via the network (not shown). Further, the network can be formed from Internet connected by a wired or wireless private line (including a line of an optical fiber) or telephone line. The network can be formed from Intranet or Extranet utilizing the Internet. Further, the private use line can be configured by a WAN (Wide Area Network) or MAN (Metropolitan area Network).

In the business managing system, the user information storage device 14 stores prices of a commodity and/or support, determined by a user 1 and dealer 2, together with individual information related to the user (in step S1) . The price to be stored in the user information storage device 14 can be a highly frequently purchased commodity or highly frequently requested support set per a user. Practically, a price determined from various parameters, such as a membership/non-membership, a purchase frequency, etc., is preferably stored in the user information database (DB) that stores these parameters and user information. When storing, the dealer 4, for example, preferably uses a client apparatus and accesses the server apparatus of the current system and stores them in the user information DB via an order acceptance processing device 13. The buying-in information storage device 15 stores buying-in prices of a commodity and/or support from the supplier 4 of the commodity and support (in step S2). Practically, prices of commodities and supports and another costs are preferably stored in a buying-in DB that stores information of respective commodities and supports.

Purchase request information transmitted by any one of a facsimile, telephone, and electronic mail is received by a reception device 11 (in step S3) in the order acceptance system, the purchase request information is premised to include user information, such as a name, a membership number (in a case of a membership registration system) , etc., capable of identifying a user 1, commodity ordering information, and/or support requesting information. The support represents various services, such as various settings as to an ordering commodity and another existing commodities, replacement and transportation of consumable items, etc. Subsequently, in the order acceptance processing device 13, the purchase request information received by the reception device 11 are consolidated, and order acceptance processing is performed in accordance with the purchase request information received from the user 1 (in step S4). Subsequently, a commodity transportation instruction device 16 instructs an appropriate provider 4 to transport and provide a commodity and/or support included in the purchase request information while referring to various information stored in the buying-in information storage device 15 and user information storage device 14 in accordance with the order acceptance processing performed by the order acceptance device 13 (in step S5). The instruction is worth purchasing of a commodity or support from the provider 4 for the administrator. The provider 4 executes transportation of a commodity and provision of support to a user 1 in accordance with the instruction (in step S6).

Such transportation and provision are arranged by a transportation company 3 serving as a delivery company or an own company (i.e., provider 4). When support request information is included in the purchase request information, the delivery company is instructed to execute the support- included therein at the time of delivery of the commodity. An invoicing device 12 invoices expenses of a commodity and/or support included in the purchase request information to the user 1 and/or dealer 2 in accordance with amounts of payment for the commodity and personal information of the user 1 stored in the user information storage device 14 (in step S7). It is preferably invoiced to the user 1 and/or dealer 2 by making out a bill (before confirming delivery) , confirming the delivery, and its result. Further, such invoicing can be performed before the step S6. The invoicing to the user 1 is as to expense for the commodity and support and includes a charge for service of the dealer 2 to be paid thereto. Invoicing to the dealer 2 is as to an amount obtained by subtracting a charge for service of the dealer 2 from expenses for a commodity and support. Invoicing to a user 1 can be built in the order acceptance system to be automatically performed by it. However, due to commodity trading based upon an agreement signed up between a user 1 and dealer 2, either the above-described manner is employed, or the above-described system preferably automatically makes and transmits a bill out for a user 1 to the dealer 2, so that the dealer 2 can invoice the bill to the user 1 as it is or after processing of it.

The above-described support request information preferably includes information related to a request for collection of a recycle commodity, such as a used toner cartridge, a used toner container, a used paper, etc. Further, a used paper private use box is preferably provided to the user, and the used paper is preferably collected, when it is full with the used paper and support request information indicating used paper collection is generated by a user. Further , the support request information can be intended to include various information, such as designated place delivery to deliver at a place that a user designates, unpacking delivery to unpack when a commodity is delivered, empty carton collection to collect an empty carton unnecessary for a user, commodity replacing delivery to perform first-in first-out, delivery date designation to designate a delivery date of an ordered commodity, urgent transportation to request for urgent transportation, fixed quantity periodical transportation to periodically transport a designated commodity so as to stock a determined quantity thereof, etc. It is preferable that the delivery company is instructed to perform user support in accordance with such information. No problem essentially occurs in processing the current system, if a processing order, except for steps S3, S4 (except for consolidation) , S5, and S6, is changed for an already registered user, for example.

According to the current system, since the other company's (i.e., commodity provider) commodity and/or support can be handled without their stocks (i.e., since the other company carries an inventory), the current system can correspond to diversified purchase needs of a customer for a commodity and support. Further, due to preparation of various purchasingmanners such as facsimile, telephone, electronic mail, etc, a user can purchase a commodity and support by its preferable purchasing manner.

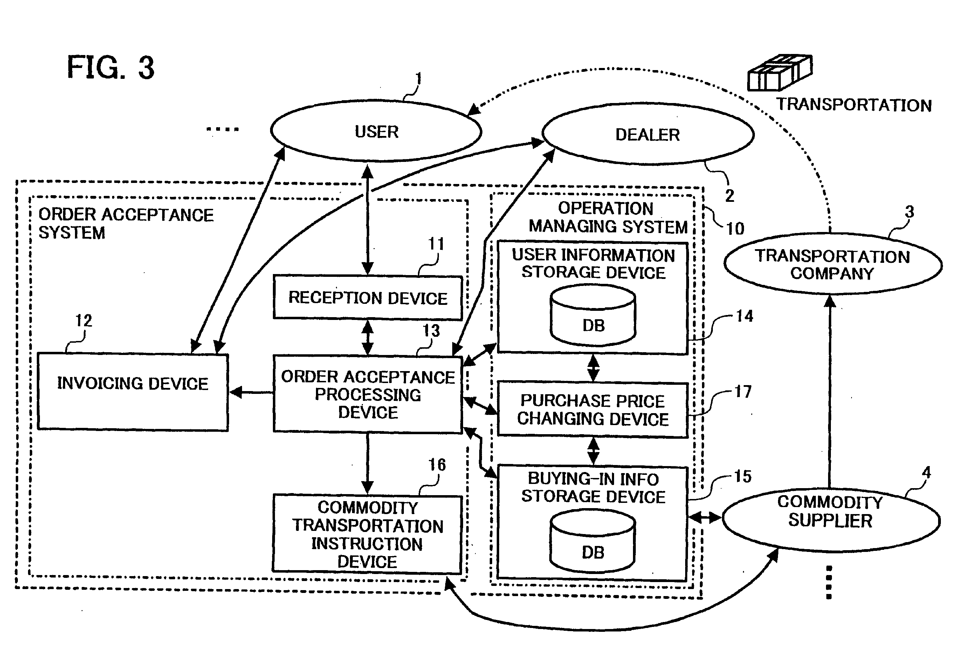

Fig. 3 is a chart illustrating a configuration of a commodity order acceptance and transportation system of another embodiment according to the present invention.
Fig. 4 is a flowchart illustrating a method of the commodity order acceptance and transportation system of Fig. 3. A commodity order acceptance and transportation system 10 of the another embodiment according to the present invention (herein after referred to as a current system) includes a buying-in price changing device 17 that changes a buying-in price in addition to the system described with reference to Figs. 1 and 2. The buying-in price changing device 17 changes unit prices (buying-in prices) of a commodity and/or support stored in the buying-in information storage device 15 in accordance with a result of compiling amounts of payment for the commodity and support stored in the user information storage device 14 (in step S15). Changing in the buying-in price in accordance with the payment amounts compiling result is performed by multiplying an average of amounts of payment of users 1 for prescribed commodities or supports as it is by a prescribed rate, for example. Otherwise, the changing can be performed by multiplying an amount of payment of users 1 for commodities and/or supports, which is obtained by weighting respective amounts of payment in accordance with frequencies of purchasing of users 1, and averaging those in accordance with, by a prescribed rate. Of course, a sales price for a user can be set with regard to a buying-in price as usual. Steps S11 to S14 of Fig. 4 are similar to those S1 to S4 of Fig. 2. Also, steps S16 to S18 of Fig. 4 are similar to those S5 to S7 of Fig. 2. Thus, these similar steps are omitted to describe. Fig. 4 illustrates an example of a procedure such that the buying-in price changing process follows the order acceptance process (in step S14). However, the changing process can be performed by any one of procedures. Further, as shown in Fig. 3, the buying-in price changing device 17 is illustrated by premising that it carries out the changing process after the order acceptance process is carried out by an instruction from the order acceptance processing device 13. However, the changing process for the buying-in price can be carried out when purchase information of a user included in the user information DB is changed. Further, buying-in prices for an order accepted commodity and support can be set to decrease after an order acceptance process (e.g. after a prescribed number of times or time period of the order acceptance processes) . The setting is preferably changed in accordance with a contract signed up between the provider 4 and administrator.

In another embodiment, the buying-in price changing device 17 can change buying-in prices of a commodity and/or support stored in the buying-in information storage device 15 in accordance with a number of commodities and a frequency of support stored by the user information storage device 14. As a result, it matches to a commercial pattern in which a buying-in price is subjected to a buying-in number. As a still another embodiment, the buying-in price changing device 17 can change buying-in prices of a commodity and/or support stored in the buying-in information storage device 15 in accordance with amounts of payment for a commodity and/or support stored in the user information storage device 14 per a user. As a result, a relation between a buying-in price and a sales price (i.e., an amount of payment) for a user can be maintained at a prescribed rate.
Thereby, an administrator can obtain stable profit.

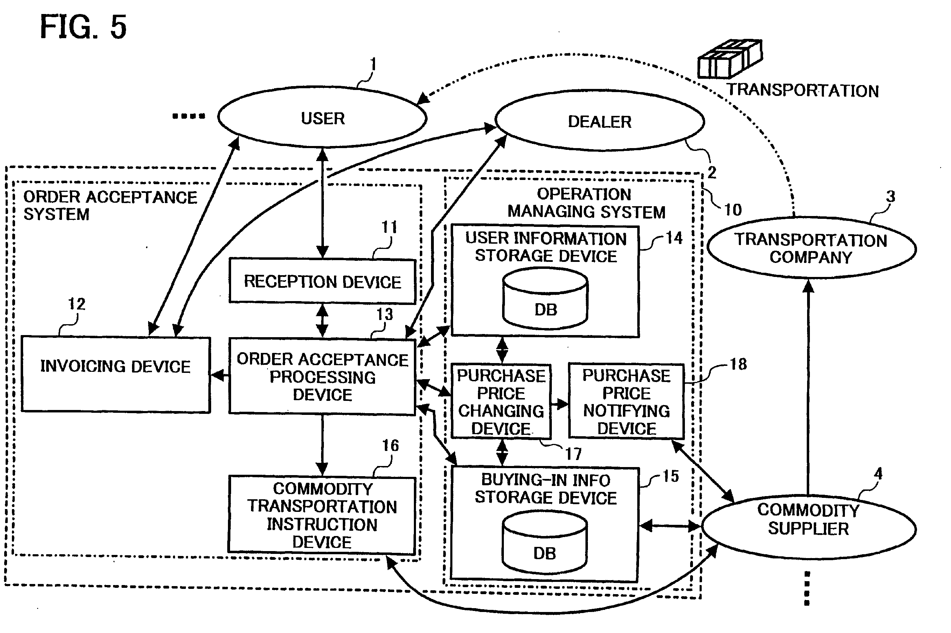

Fig. 5 is a chart illustrating a configuration of a commodity order acceptance and transportation system as another embodiment according to the present invention.

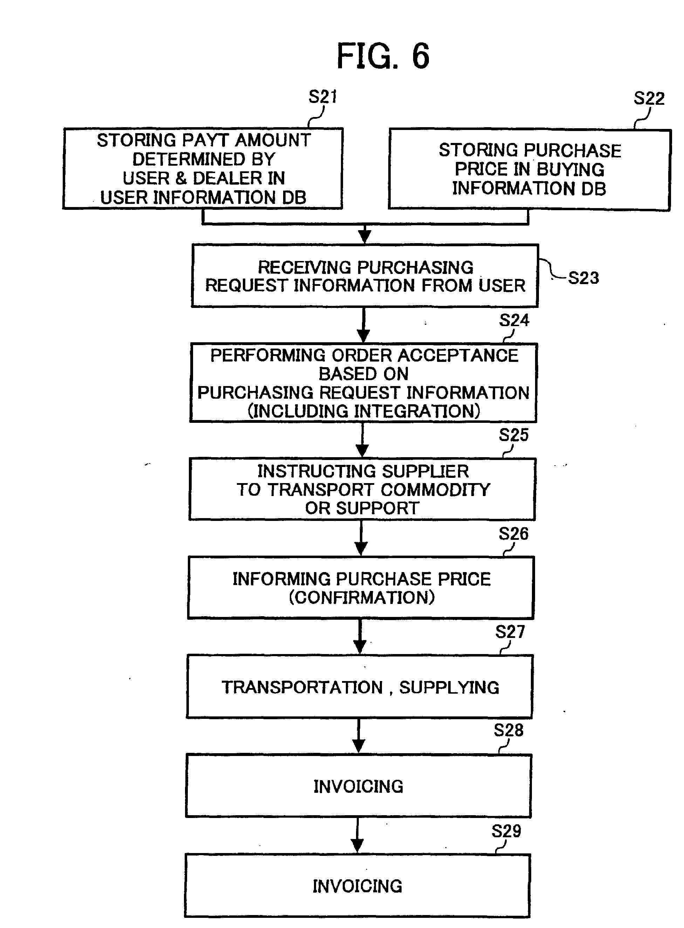

Fig. 4is a flowchart illustrating a method of the commodity order acceptance and transportation system of Fig. 5. A commodity order acceptance and transportation system 10 (herein after referred to as a current system) includes a buying-in price notifying device 18 that reports a provider 4 of a buying-in price in addition to systems of embodiments as described with reference to Figs. 3 and 4. The buying-in price notifying device 18 notifies a terminal apparatus of the provider, connected to the current system via a network (e.g. various connection configurations , such as Internet, Intranet, etc) of a buying-in price changed (in step S25) by the buying-in price changing device 17 (in step S26) . Further, steps from S21 to S25 of Fig. 6 are similar to those from S11 to S15 of Fig. 4. Also, steps from S27 to S29 of Fig. 6 are similar to those from S27 to S29 of Fig. 4. Thus, similar steps are omitted to describe.

As still another embodiment of the present invention, each of the systems described with reference to Figs. 3, 4, 5, and 6 includes a buying-in price confirmation device in the buying-in price changing device 17 so as to cause the client terminal (e.g. a multiple purpose computer or mobile terminal, such as a PC), connected to the commodity order acceptance and transportation system 10 via the network, to confirm a change in a buying-in price, and preferably reflect only a confirmed (approved) change.
Further, as still another embodiment having a similar function, each of the systems described with reference to Figs. 1 to 6 can include the buying-in price conforming device in a commodity transportation instruction device 16 so as to cause the terminal apparatus of the provider 4, connected to the commodity order acceptance and transportation system 10 to quote and confirm a buying-in price stored by the buying-in information storage device 15.

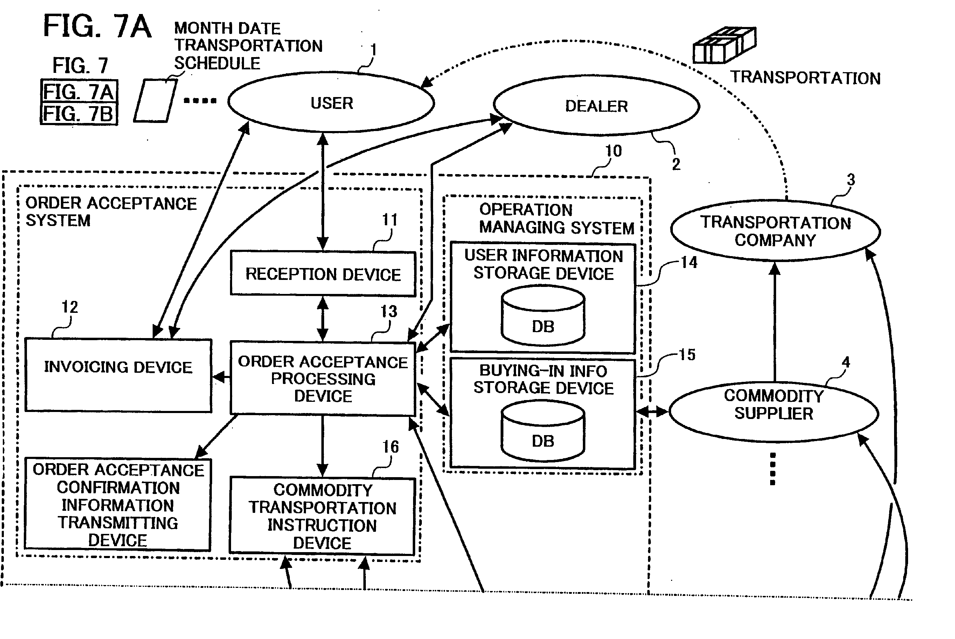

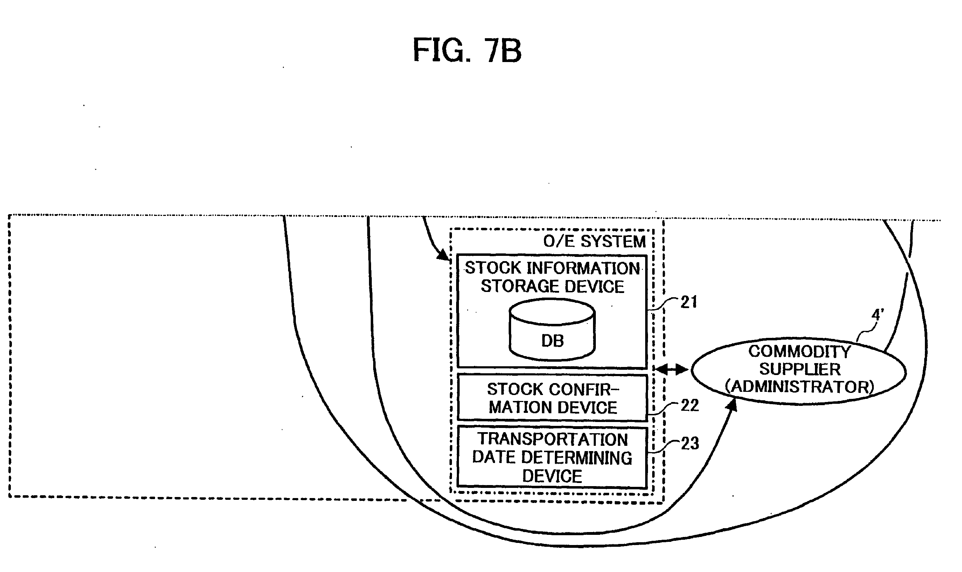

Fig. 7 is a chart illustrating a configuration of a commodity order acceptance and transportation system of still another embodiment of the present invention.

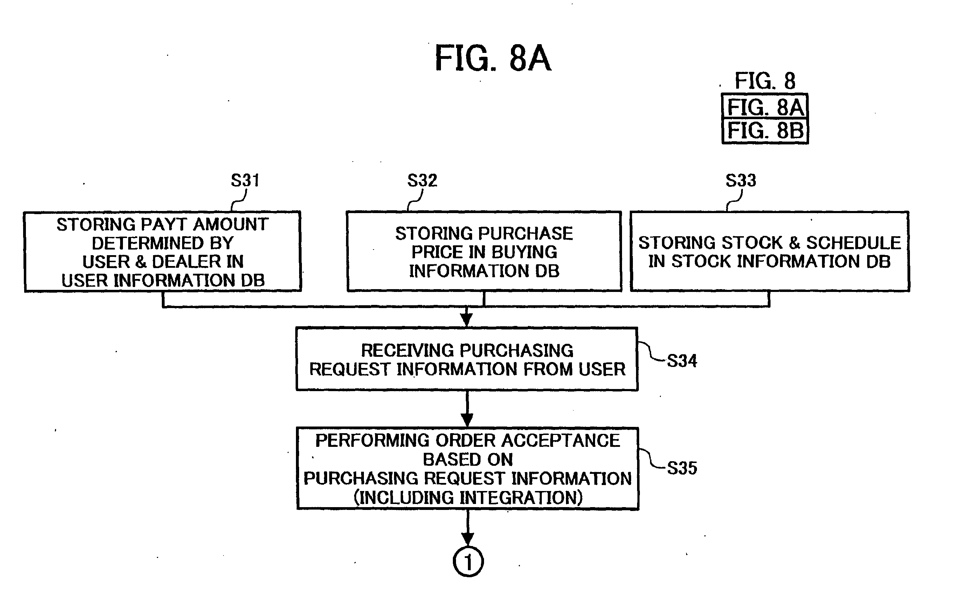

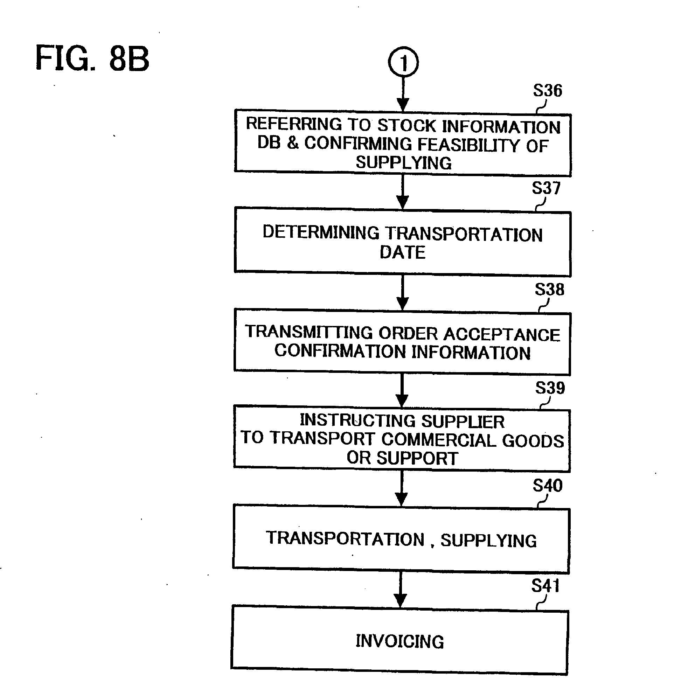

Fig. 8 is a flowchart illustrating a method for order accepting and transporting of a commodity in the system of Fig. 7. A commodity order acceptance and transportation system 10 (hereinafter referred to as a current system) of the still another embodiment is a system capable of also providing a commodity and support of an own company (administrator) in the above-described entire embodiments. Specifically, one of the providers 4 is premised as a trader 4' administrating the current system 10. The current system further includes an inventory information storage device 21, inventory confirmation device 22, transportation date determining device 23, and order acceptance confirmation information transmitting device 24. For the sake of convenience, the order acceptance confirmation information transmitting device 24 is described as a device included in the order acceptance system. Each of devices 21, 22 and 23 is described as a device included in an order entry system (O/E system) . Further, steps S31, S32, S34, S35, S40 and S41 of Fig. 8 are similar to those S1, S2, S3, S4, S6 and S7 of Fig. 2. Thus, similar description is omitted.

In the O/E system, the inventory information storage device 21 stores commodity inventory information and/or schedule information related to support personnel (in step S33). Practically, inventory information and schedule information are preferably stored in the inventory information DB. The inventory confirmationdevice 22 confirms if commodity and/or supportordered can be provided based upon the information (included in the inventory information DB) stored in the inventory information storage device 21 (in step S36). This confirmation process is preferably executed after or before an order acceptance process in step S35. The transportation date determining device 23 determines a transportation date of a commodity included in the purchase request information in accordance with inventory confirmation result obtained by the inventory confirmation device 22 and the purchase request information (in step S37). The order acceptance confirmation information transmitting device 24 automatically transmits the transportation date determined by the transportation date determining device 23 together with the purchase request information as order acceptance confirmation to a user by a facsimile or electronic mail (in step S38). The commodity transportation instruction device 16 instructs to transport a commodity on the transportation date determined by the transportation date determining device 23 (in step S39).

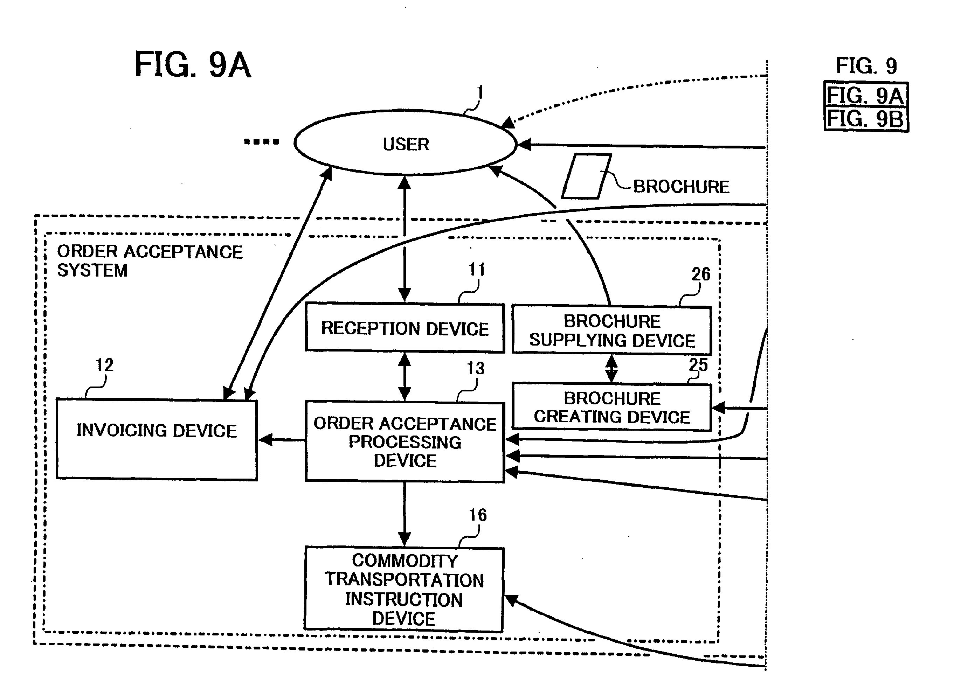

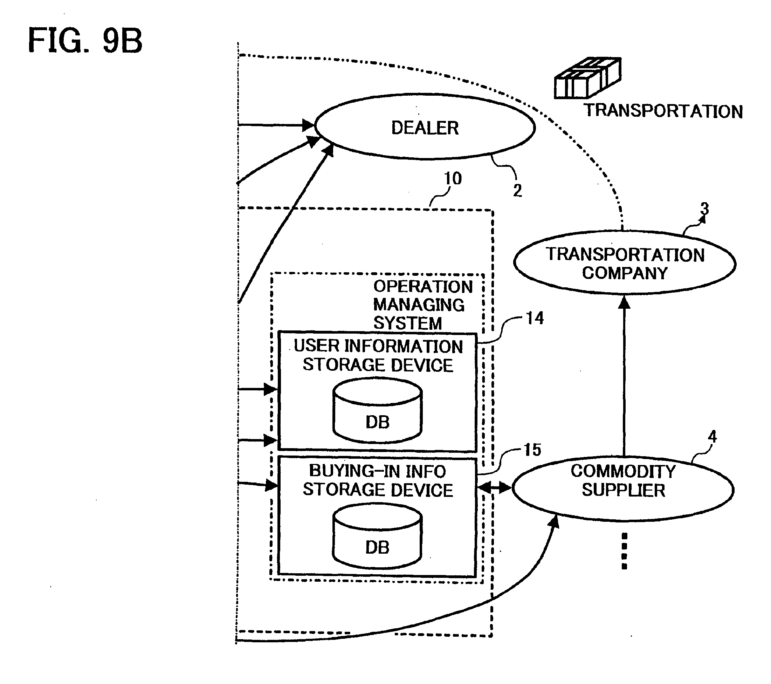

Fig. 9 is a chart illustrating still another embodiment of a commodity order acceptance and transportation system according to the present invention. The another embodiment of a commodity order acceptance and transportation system 10 of the present invention (hereinafter referred to as a current system) is a system capable of providing a user private use brochure in the above-described entire embodiments. The current system 10 includes a brochure creating device 25 and a brochure proving device 26. Respective of the devices 25 and 26 are described as devices included in the order acceptance system in Fig. 9. The brochure creating device 25 creates a purchase request form and brochure of a commodity in accordance with a payment amount and personal information of a user stored in the user information storage device 14. The brochure providing device 26 provides a user with respective of the purchase request form and brochure created by the brochure creating device 25. As a providing method, they can be obtained when a user input a user ID on a Home Page through Internet. Otherwise, they can be recorded in a recording medium such as a CD-ROM or duplicated and mailed.

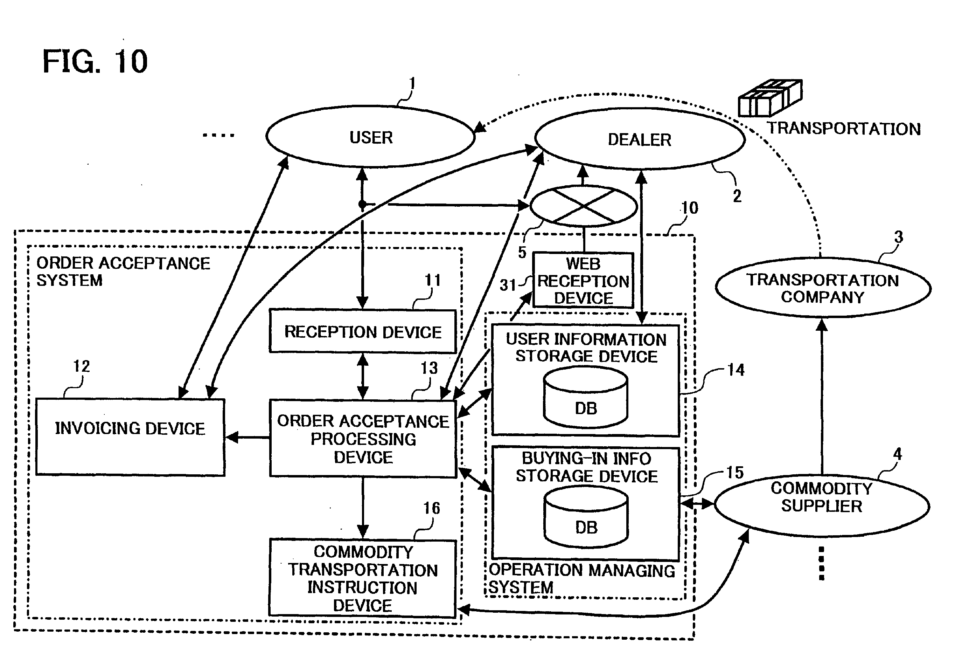

Fig. 10 is a chart illustrating still another embodiment of a configuration of a commodity order acceptance and transportation system. A commodity order acceptance and transportation system 10' of the still another embodiment (hereafter referred to as a current system) is a system capable of purchasing a commodity and support by a Web through the Internet 5 in the above-described entire embodiments. Specifically, the current system 10' includes a Web reception device (a network reception device) 31 that receives purchase request information including user information and commodity order acceptance information and/or support request information transmitted from the user (actually, a client apparatus such as a PC) to a Web server through the Internet. Further, a difference from the above-described respective embodiments is as follows:
First, the order acceptance processing device 13 consolidates purchase request information received by the reception device 11 and Web reception device 31. The user information storage device 14 stores an amount of payment, determined by a user and dealer, for a commodity and/or support through the reception device 11, together with personal information of a user. The user information storage device 14 also stores an amount of payment for a commodity and/or support through the Web reception device 31 together with personal information of a user. Further, as for the invoicing device 12, what received by the Web reception device 31 is preferably settled up previously on the network.

As still another embodiment according to the present invention, an order acceptance system, for example, included in a commodity order acceptance and transportation system, can store frequently asked questions from the user and dealer together with answers thereto, and provide the user and/or dealer with the stored inquiry information in response to inquiry about a commodity and support from a user and dealer. As a providing method, those information can be placed on a Home Page through Internet or provided by a brochure and the like. By indicating inquiry information, it is useful for a dealer when holding a business meeting with a user, and a user friendly system can be established. It is preferable that the statistic of user personal information, amount of payment, purchase request information or the like is taken and is reflected to inquiry information.

In still another embodiment, when a user signs a maintenance contract for an OA instrument and so on, a service person capable of executing the maintenance contract is allocated as a delivery person of a service agent. Simultaneously, the commodity transportation instruction device can instruct him or her to maintain the OA instrument at the time of delivery to the user.

Even though, a commodity order acceptance and transportation method and system are described above in respective embodiments, the present invention can be realized by a program causing a computer to execute such a method and a computer readable recording medium recording the program. Further, it can also be realized by a program, which causes a computer to function as a system or respective devices in the system, and a computer readable recording medium that is recorded with the program.

Herein below, an embodiment of a recording medium that stores program and data for realizing a function of a commodity order acceptance and transportation system according the present invention is described. As a recording medium, CD-ROM, optical magnetic disc, DVD-ROM, FD, Flush memory, and various types of ROM and RAM can be anticipated. By causing these recording mediums to execute functions of systems of the above-described respective embodiments according to the present invention, and storing and circulating a program realizing a function of accepting and transporting commodity order, these functions are readily achieved. Then, the above-described recording medium is attached and read from an information processing apparatus such as a computer, or the program is stored and read from the recording medium included in the information processing apparatus upon need. Thereby, the function of commodity order acceptance and transportation of the present invention can be achieved.

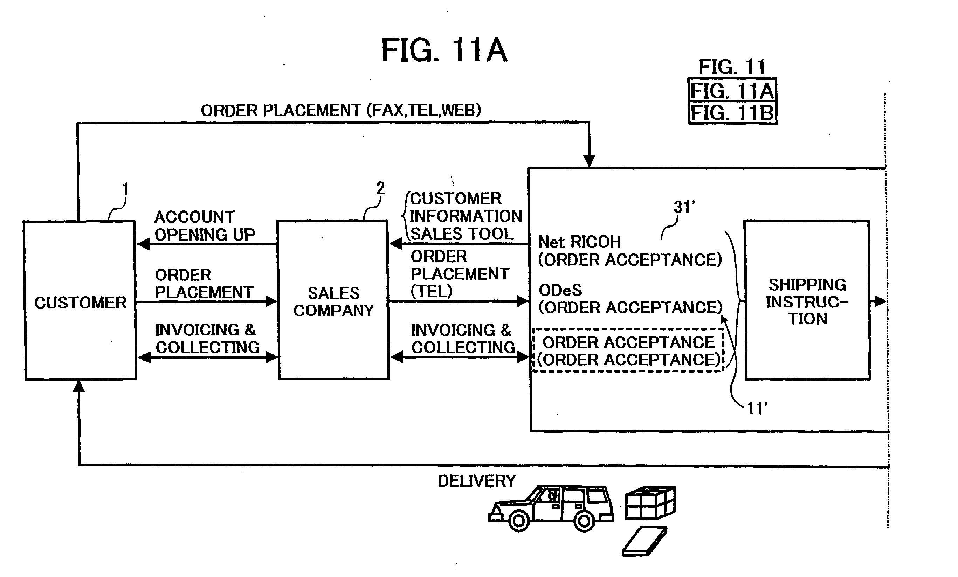

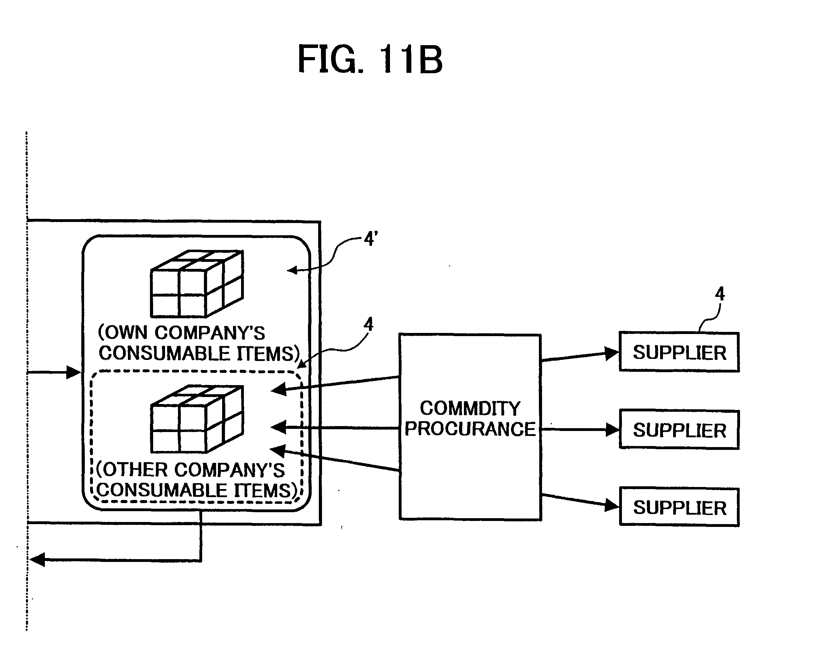

Herein below, one embodiment of a commodity order acceptance and transportation system and method that builds in the above-described various embodiments is described. Fig. 11 is a chart illustrating the embodiment of a commodity order acceptance and transportation system. The embodiment corresponds to diversion of a purchasing manner used when a user 1 as a customer purchases a commodity and enjoy support. Initially, an office supply transportation service (herein after referred to as an Office supplies Delivery Service (ODes)) 11' serving as a reception device, and a NetRicoh 31' serving us a Web reception device procure commodities from not only an administrative or affiliate company 4', but also a plurality of suppliers 4. Commodities including the other company's can be purchased and stocked in a concentrated manner. However, the other company's commodity is preferably procured (i.e., a transportation request) in response to a purchase request from a user 1. Both the ODes 11' and NetRicoh 31' create (e.g. brochure, advertising subsidiary) and provide a sales company 2 with commodity inventory managing and sales promoting tools (preferably including customer confirmation such as purchase career) . The sales company 2 performs sales activity to the user (customer), and performs user registration if the user is new. The user 1 is enabled to order a commodity with the ODes 11' and NetRicoh 31' through Internet, Facsimile, and telephone. The ODes 11' and NetRicoh having accepted commodity order from the user 1 delivers thereto (together with a delivery accessory service in a support menu), and collect an amount of payment directly or via a sales company 2. Further, the ODes 11' and NetRicoh provide the sales company 2 with customer information, correspond to inquiry from a user about a commodity, and provide the user with commodity and purchase information. Further, a commodity can be provided at an optimal price per a customer. The ODes 11' side can realize one stop order by a brochure published every semiannual. (In such a case,) it is preferable to lower its price and create a brochure by per a user 1 using a point system or the like, and provide the user 1 therewith. Further, the order acceptance center of the ODes 11' corresponds also to direct order acceptance from a user 1 through a telephone or the like. According to this embodiment, the direct order acceptance can be dealt for customers across the country by a short delivery period (e.g. current day or day after). Further, direct inquiry from the customers can be dealt by establishing an inquiry center. An order via a sales company 2 by telephone as indicated by a dotted line in Fig. 11 illustrates a conventional manner.

Advantage of the administrator and sales company 2 is now described as one example. Benefit introduced by a sales activity according to the present invention (i.e., business betterment or the like by a new system) is finally stored again to SA (service assistant), CE (customer engineer), and MG (manager), who have contributed thereto, as an amount of payment for those duties. Specifically, It can be combined with a system that increases a reputation of an employee in accordance with the contribution. As reflection items thereto,
ODeS (Facsimile order acceptance) sales proceeds, a customer support system (CSS: Automatic meter reading, Remote diagnosis, Automatic toner delivery), a performance system data reliance (PDR: Progress Degree in Reliability to a number of a counter of a Copier and Printer), a personal computer and device service (P&DS), a maintenance contract of a laser printer (at a time of sales or delivery), a M-Pac (maintenance package by a counter) contrast number, and a total copy volume (TCV) increasing rate or the like are exemplified. Advantage for the administrator is as follows:

Specifically, reduction of a cost for an order acceptance operation, reduction of load on operations of confirming a operation responsible person, SA, and CE, Increasing in operational efficiency of CE by reducing EM (emergency management) visiting, reduction of order generating/accepting and transportation operation at a user contact point, minimization of lost credit obligation (i.e., avoiding collection leakage), shortening of a cash flow by quick registration, securement of a new profit source (i.e. , profitable if malfunction rate is low) , easy capturing of information related to an operational status of another company's IT instrument (making sales activity more efficient) , increasing in operational efficiency of a CE by reducing an EM rate, and expansion of performance charge (PC) profit are exemplified.

Further, a user can enjoy the following advantages:
reduction of a cost for an order acceptance operation by one stop order, reduction of an operation of confirmation, enjoying secure feeling due to remote monitoring,
reduction of an order acceptance operation, prevention from temporally excessive invoicing or the like by reliably precisely checking fees, reduction of instrument maintenance service fee, making instrument maintenance business into more efficient (e.g. single window), reduction of repair fee, and keeping a machine to be a high quality, are realized for example.

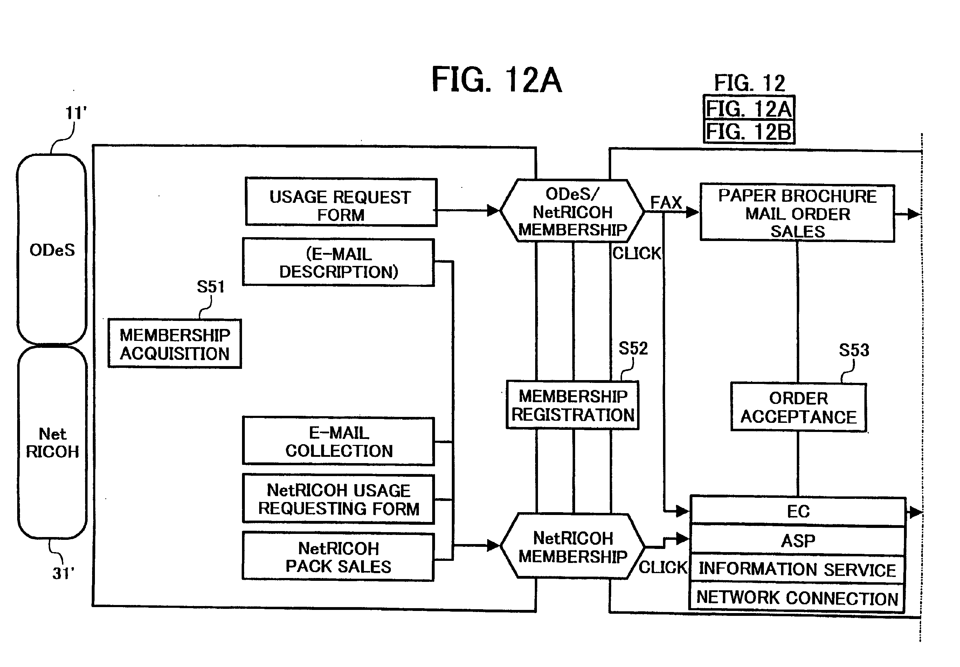

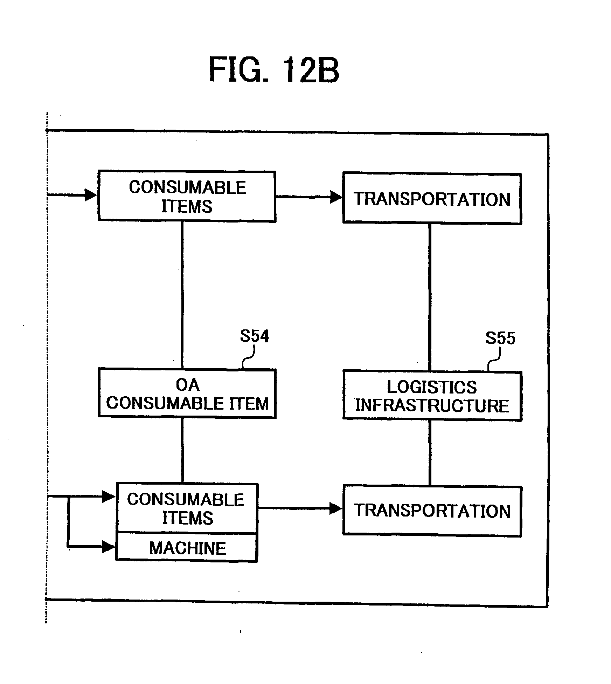

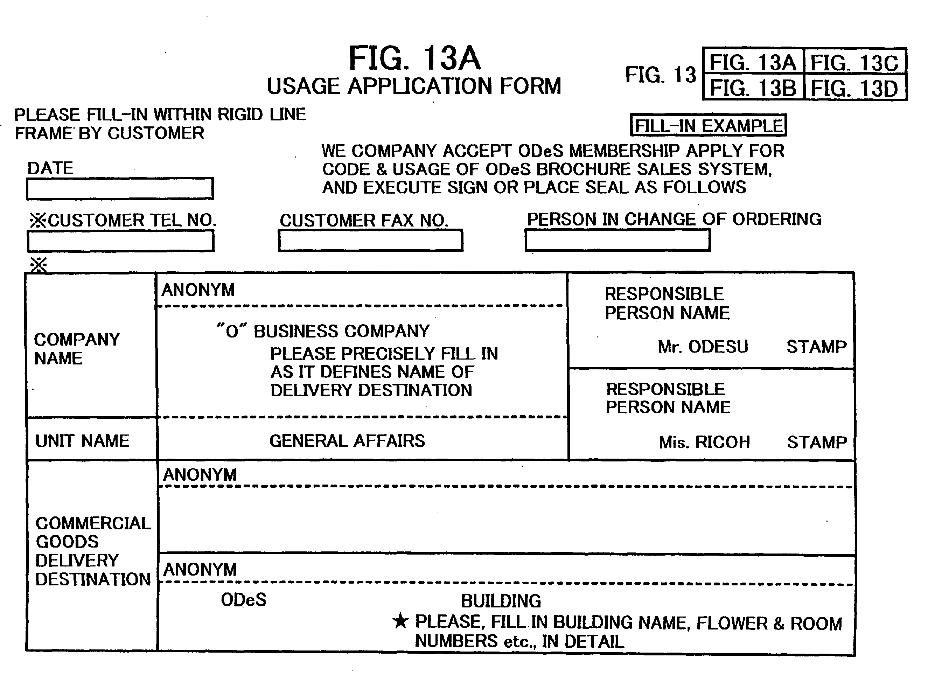

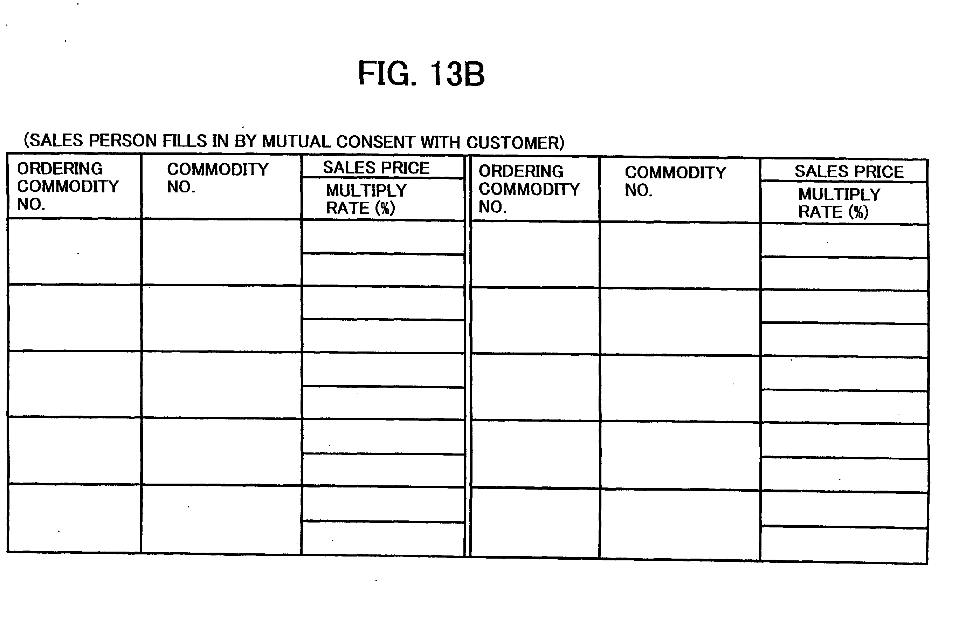

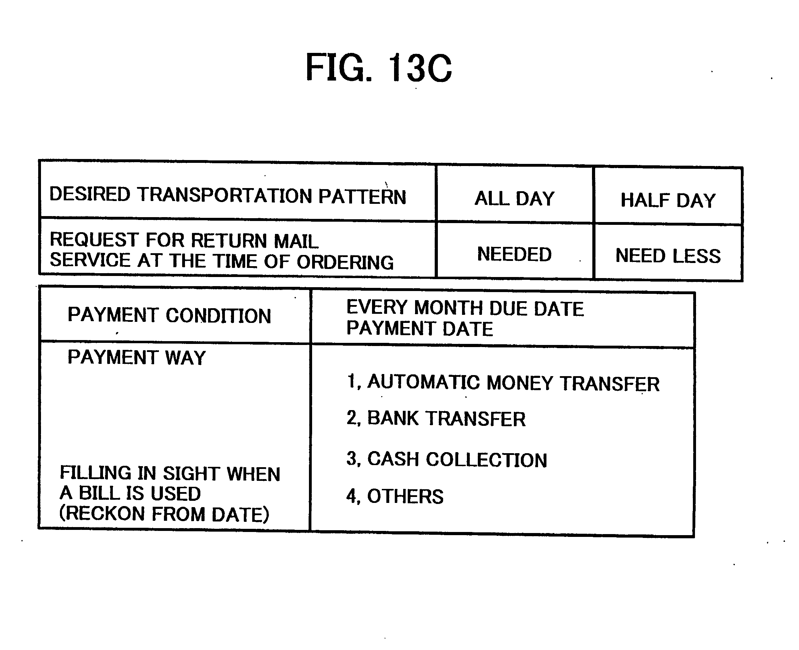

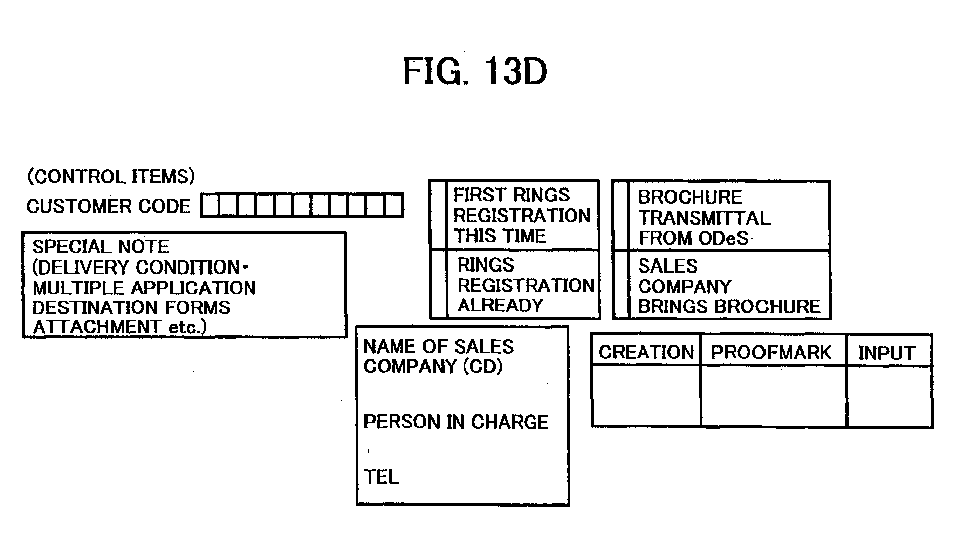

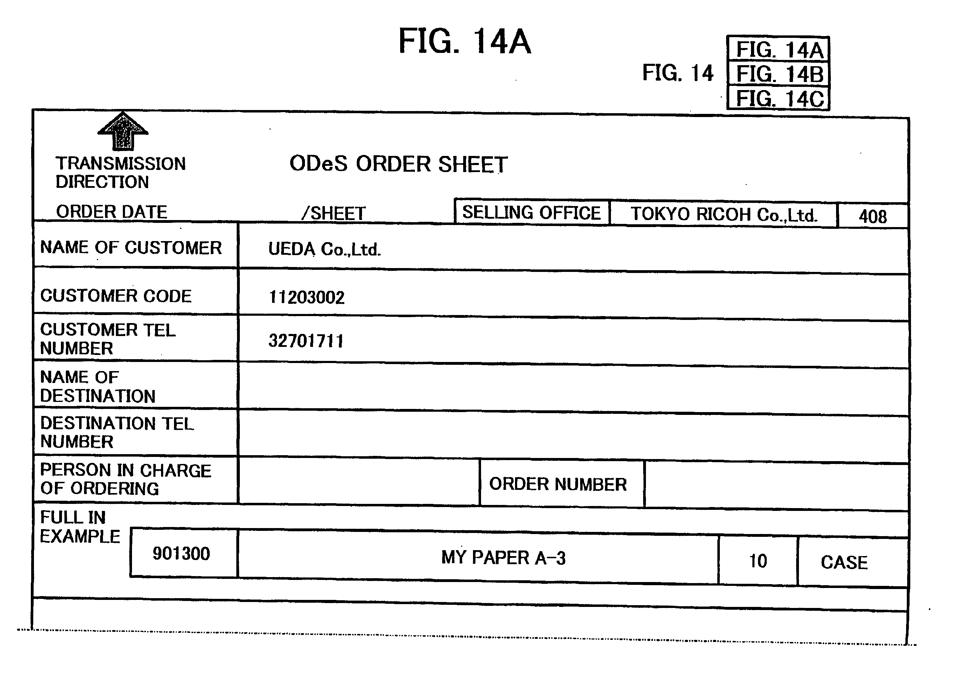

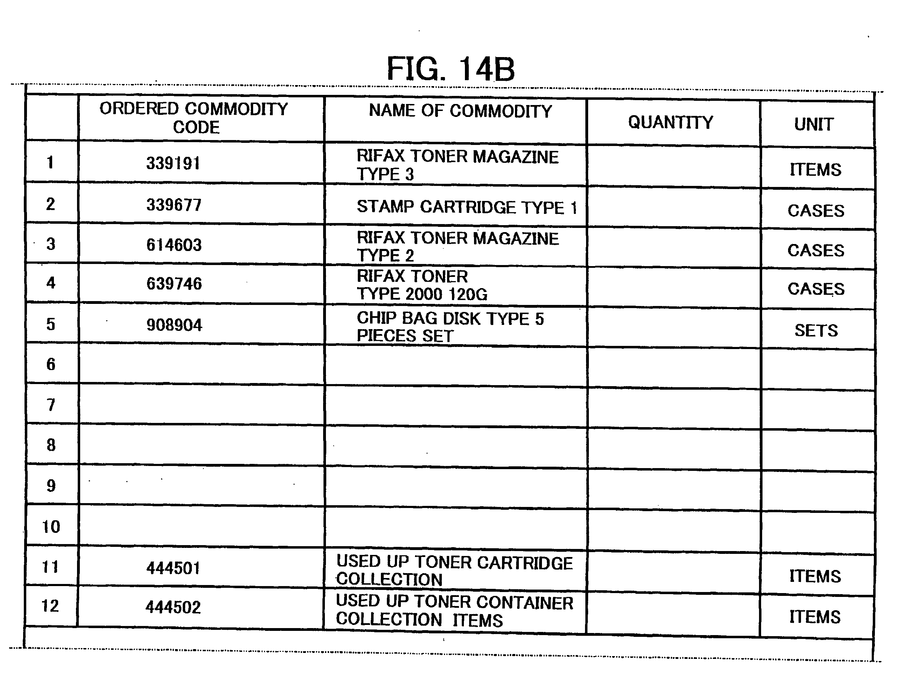

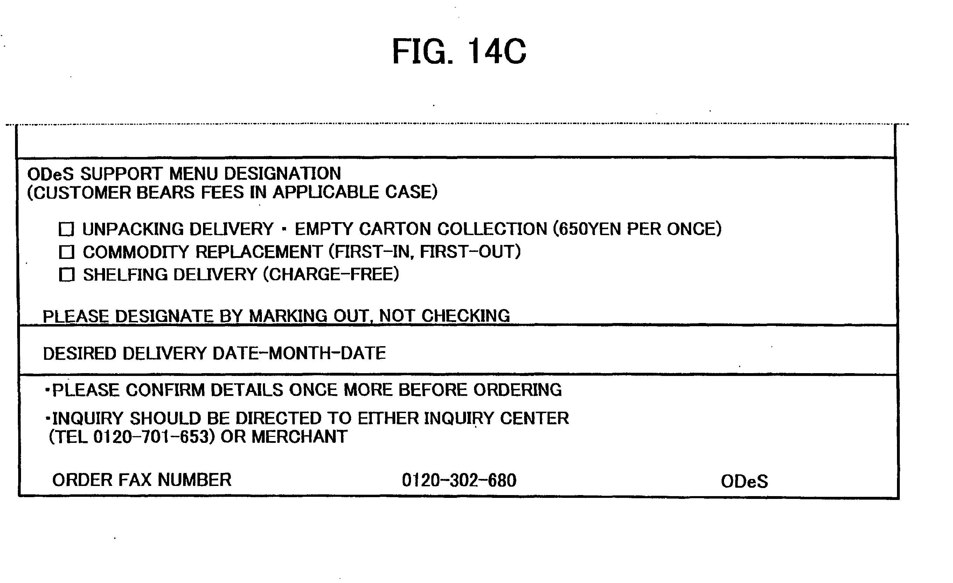

Fig. 12 is a flowchart illustrating a procedure started from a membership registration to commodity transportation employed in the embodiment of Fig. 11. Fig. 13 is a chart illustrating one example of a usage requesting form for the ODeS. Fig. 14 is a chart illustrating one example of an order sheet for the ODeS. A procedure in the ODeS 11' side is now described. First, when a membership is to be acquired (in step S51) , a user requests for a service by a usage requesting form. The usage requesting form requires a user's address, telephone and facsimile numbers, person in charge, and chairman in case of a company, and electronic mail address upon need. Further, as to a commodity highly frequently purchased, a sales company fills in a commodity name, commodity number, and sales price (% sales price) determined by negotiating with a user. Further, similar to a typical mail order service, a user code (i.e., a customer code) , ways of payment and brochure distribution (e.g. either a sales company brings with itself or ODeS transmits thereof) are needed to write. Further, in addition to a sales company, a person in charge, existence of registration in a backbone business system, and special note, such as a transportation condition, multiple destinations chit attachment, etc., are preferably written. By inputting the requesting form, a membership registration is performed. Further, when a description of E-mail appears in the usage requesting form, it's registration can be performed as a membership of NetRICOH31'.

Similar to a typical mail order service that uses a paper brochure, a customer is recommended to fill in a commodity number in an order sheet and send it by facsimile, when accepting an order (in step S53) . A user (customer) name, user code, user telephone number, shipping address, shipping destination telephone number, person in charge of ordering, and order number or the like are filled in the ODeS order sheet. Otherwise, items related to a user other than ordering commodities can be pre-printed in the ODeS order sheet by default. Beside a code, commodity name, quantity, and unit of an order commodity including recycling of a used up toner cartridge, designation of the other support menu executed in the ODeS and a desired delivery date or the like are preferably filled in. As the other support menu, unpacking delivery, empty carton recovery, commodity replacement (first-out first-in) , and shelving delivery or the like are indicated together with fees. Subsequently, transportation of an OA consumable item commodity is instructed (in step S54), and performed by a logistics infrastructure (in step S55). As a result, the commodity is delivered to a user.

Herein below, a procedure in the NetRICOH side is described. Firstly, when a membership is acquired (in step S51), a user requests a service through a Web or service usage requesting form. Then, E-Mail information is required to provide. In addition, a sales packed with the other service is enabled. When the membership registration is completed (in step S52), and a commodity is to be ordered (in step S53) , a user connects to Internet, and receives information related to the commodity or the like. The Web can be provided from an ASP trader. The information can include a user private use payment amount. The user electronically makes a payment in a similar manner to a typical electronic business transaction and orders a commodity. The Web server receives the order. The following operation is similar to that performed in the ODeS 11'. Further, an OA consumable item logistic organizations for the ODeS 11' and NetRICOH 31' are preferably integrated. Further, OA consumable items of the ODeS 11' and NetRICOH 31' preferably handle the same commodity.

According to this embodiment, windows of maintenance administrating/repairing and consumable item ordering for a PC and peripherals can be integrated. As a result, labor of instrument administration and order of consumable items per a manufacturer, which have been bothersome so far, is reduced or eliminated. Further, demands of a customer to not only assortment but also one stop with regard to registration/order and payment can be satisfied. By per forming customer registration and inputting user ID once, commodities on various sites can be purchased. In addition, every commodity purchases can be paid once, and every commodities purchased once can be transported at once. Also, one location of the window can correspond to an inquiry about various commodities and sites. Further, by handling the other company's commodities, and promoting its purchasing, a condition of usage of the other company's machine is analyzed. As a result, optimal proposal can be made.

Still another embodiment is now described with reference to the drawings.

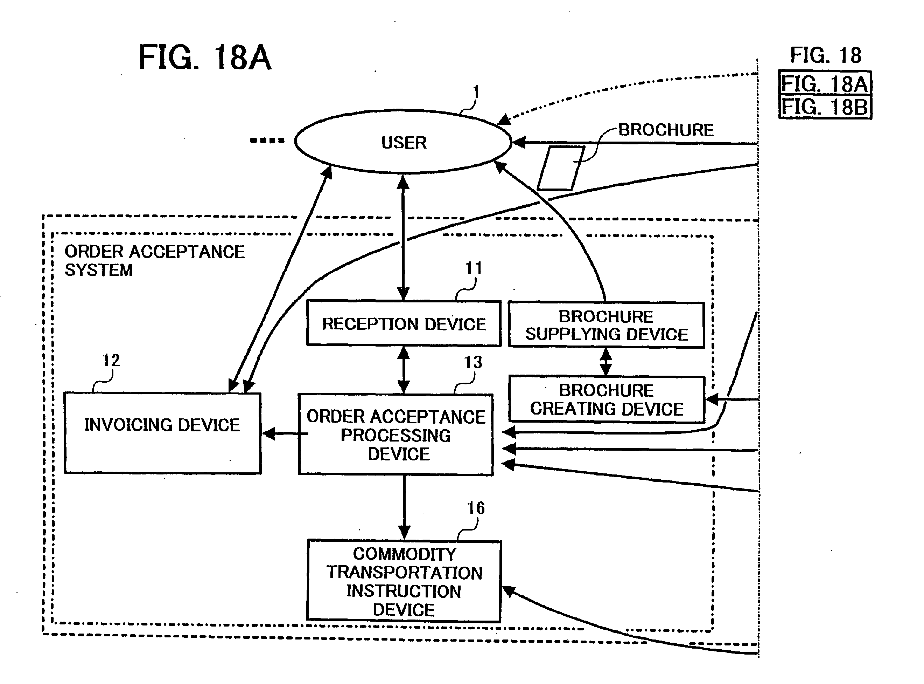

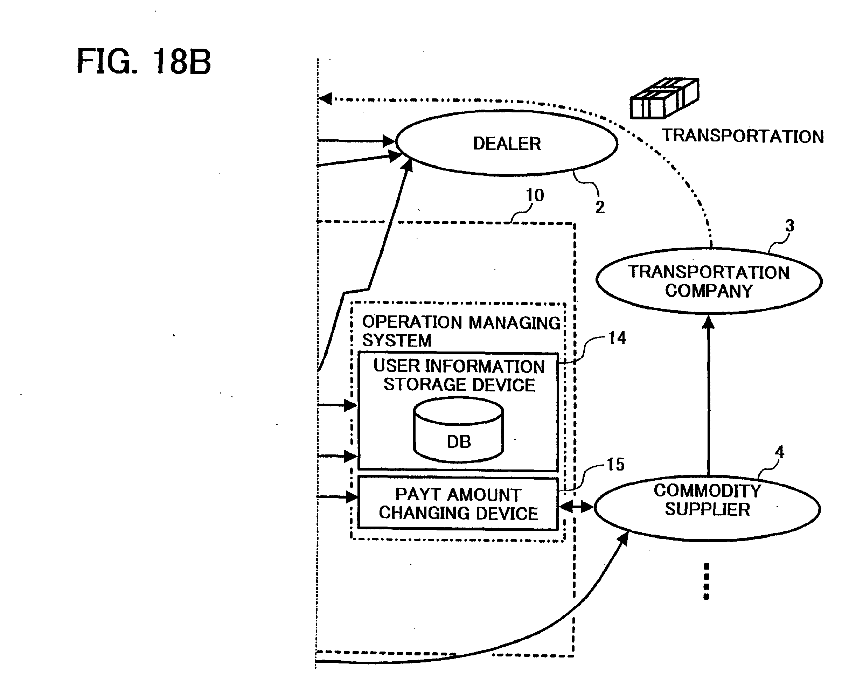

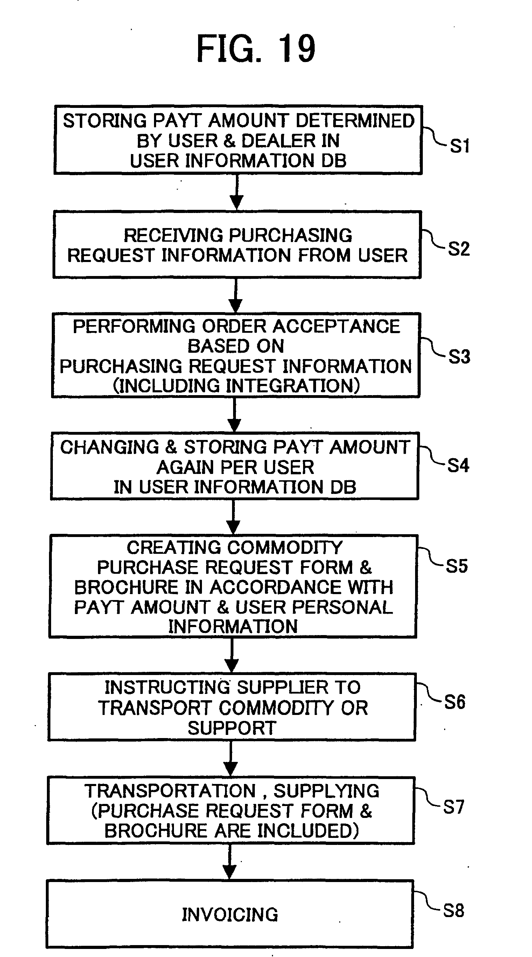

Fig. 18 is a chart illustrating a construction of a commodity order acceptance and transportation system as one example according to the present invention. Fig. 19 is a flowchart illustrating a commodity order acceptance and transportation method of the system of Fig. 1. The commodity order acceptance and transportation system 10 (hereinafter referred to as a current system) is a system that allows an administrator (e.g. a manufacturer) to sell and provide a commodity and support to a user 1 via any one of facsimile, telephone, and electronic mail. The commodity order acceptance and transportation system 10 is capable of setting and clearly specifying payment amounts for the commodity and support per a user to the user as a feature. The current system is a system of the invention disclosed in Japanese Patent Application No. 2000-374376 filed by this applicant and is capable of providing a commodity and support, while setting and clearly specifying a payment amount to a user 1. A system that causes a commodity provider 4 to provide a commodity, i.e., that handles only the another company's commodity and support and not own is initially described in the current embodiment. However, it is practical that both the another and own company's commodities and supports are handled as mentioned later. The current system is premised to include a reception device 11, an invoicing device 12, an order acceptance device 13, a commodity transportation instruction device 16, a commodity transportation instruction device 16, a brochure creating device 17, a brochure providing device 18, a user information storage device 14, and a buying-in information storage device 15. For the sake of simplicity, respective devices 11, 12, 13, 16, 17 and 18 are described as devices included in an order acceptance system. Respective devices 14 and 15 are described as devices included in an operation administration system.

Further, each of devices except for the reception device 11 and a portion of a later described brochure providing device (e. g. a mailing device in a case when a brochure is mailed) can be operated by a computer in this specification.
In such a situation, as a device for those, a program operating the computer can be stored in a server apparatus and executed. The server apparatus and various databases (DBs) stored in a later described storage device can employ conformations such that the DBs are either physically included in the server apparatus or separated by connected thereto via a network. Further, each of the DBs can be separated or integrated. In short, every type of configuration is allowable if functions of theses DBs can be exerted. A conformation of the server apparatus can be a computer including a server function having a hierarchical structure, such as a server for network connection use (e.g. a Web server when a later described Internet connection is needed), an authentication server for authenticating each user, a database administration server for administrating various databases, etc. Practically, a computer is enough as far as storing a program executing functions of later described respective devices. This program preferably includes a graphical user interface so as to enable a user to readily use the respective devices. Further, a transportation instruction to a provider 4 is preferably executed to a client apparatus of the provider 4 via the network. Also, processing of a dealer 2 is preferably executed from a client of the dealer 2 via the network (not shown). Further, the network can be formed from Internet connected by a wired or wireless private line (including a line of an optical fiber) or telephone line. The network can be formed from Intranet or Extranet utilizing the Internet. Further, the private use line can be configured by a WAN (Wide Area Network) or MAN (Metropolitan area Network).

In the operation managing system, the user information storage device 14 stores prices of a commodity and/or support, determined by a user 1 and dealer 2, together with individual information related to the user (in step S1). The price to be stored in the user information storage device 14 can be of a highly frequently purchased commodity or highly frequently requested support set per a user. Practically, a price determined from various parameters, such as a membership/non-membership, a purchase frequency, etc., is preferably stored in the user information database (DB) that stores these parameters and user information.
When storing, the dealer 4, for example, preferably uses a client apparatus and accesses the server apparatus of the current system and stores them in the user information DB via an order acceptance processing device 13. The buying-in information storage device 15 stores buying-in prices of a commodity and/or support from the supplier 4 of the commodity and support (in step S2). Practically, prices of commodities and supports and another costs are necessarily stored in a buying-in DB that stores information of respective commodities and supports. However, details thereof are not described.

Purchase request information transmitted by any one of a facsimile, telephone, and electronic mail is received by a reception device 11 (in step S2) of the order acceptance system. The purchase request information is premised to include user information, such as a name, a membership number (in a case of amembership registration system) , etc., capable of identifying a user 1, commodity ordering information, and/or support requesting information. The support represents various services, such as various settings as to an ordering commodity and another existing commodities, replacement and transportation of consumable items, etc. To perform reception at this stage, a purchase requesting form, in which formal items are filled, is transmitted by facsimile, telephone, or electronic mail while referring to a later described brochure. Subsequently, in the order acceptance processing device 13, the purchase request information received by the reception device 11 are consolidated, and order acceptance processing is performed in accordance with the purchase request information received from the user 1 (in step S3). The payment amount stored in the user information storage device 14 is changed and stored again by the payment amount changing device 15 per a user (in step S4). The payment amount changing device 15 can discount and store respective payment amounts for the commodities and supports in accordance with a frequency of requests for commodities and supports. Further, the payment amount changing device 15 can discount and store partial or the entire payment amounts for commodities and supports by a prescribed percentage in accordance with a frequency of requests for the commodities and supports. In this example, a prescribed percentage of discount is made in accordance with a number of sales of commodities and supports of the partial or entire payment amounts , i.e., the entire purchase amounts or that within a prescribed time period by a user. When executing such a discounting manner, an initial payment amount and a rate of a change in the payment amount (a change rate in accordance with a frequency of requests) can be set. The brochure creating device 17 creates a purchase request form together with a brochure of a commodity in accordance with a payment amount (i.e., a payment amount changed and stored again by the payment amount changing device 15) stored in the user information storage device 14. A frequency of creating a brochure is preferably freely set.

Subsequently, a commodity transportation instruction device 16 instructs an appropriate provider 4 to transport and provide a commodity and/or support included in the purchase request information while referring to various information stored in the user information storage device 14 in accordance with the order acceptance processing performed by the order acceptance device 13 (in step S6). The instruction is worth purchasing of a commodity or support from the provider 4 for the administrator. Subsequently, the provider 4 executes transportation of a commodity and provision of support to a user in accordance with the instruction (in step S7). The brochure providing device 18 provides a user with respective of the purchase request form and brochure created by the brochure creating device 17. As a providing method, they can be obtained when a user input a user ID on a Home Page through Internet.
Otherwise, they can be recorded in a recording medium such as a CD-ROM or duplicated and mailed. Further, duplication of the record can also be mailed.

Such transportation and provision are arranged by a transportation company 3 serving as a delivery company or an own company (i.e., provider 4). When support request information is included in the purchase request information, the delivery company is instructed to execute the support included therein at the time of delivery of the commodity. An invoicing device 12 invoices expenses of a commodity and/or support included in the purchase request information to the user 1 and/or dealer 2 in accordance with amounts of payment for the commodity and personal information of the user 1 stored in the user information storage device 14 (in step S7) . It is preferably invoiced to the user 1 and/or dealer 2 by making out a bill (before confirming delivery), confirming the delivery, and its result. Further, such invoicing can be performed before the step S6. The invoicing to the user 1 is as to expense for the commodity and support and includes a charge for service of the dealer 2 to be paid thereto. Invoicing to the dealer 2 is as to an amount obtained by subtracting a charge for service of the dealer 2 from expenses for a commodity and support. Invoicing to a user 1 can be built in the order acceptance system to be automatically performed by it. However, due to commodity trading based upon an agreement signed up between a user 1 and dealer 2, either the above-described manner is employed, or the above-described system preferably automatically makes and transmits a bill out for a user 1 to the dealer 2, so that the dealer 2 can invoice the bill to the user 1 as it is or after processing of it.

The above-described support request information preferably includes information related to a request for collection of a recycle commodity, such as a used toner cartridge, a used toner container, a used paper, etc. Further, a used paper private use box is preferably provided to the user, and the used paper is preferably collected, when it is full with the used paper and support request information indicating used paper collection is generated by auser. Further, the support request information can be intended to include various information, such as designated place delivery to deliver at a place that a user designates, unpacking delivery to unpack when a commodity is delivered, empty carton collection to collect an empty carton unnecessary for a user, commodity replacing delivery to perform first-in first-out, delivery date designation to designate a delivery date of an ordered commodity, urgent transportation to request for urgent transportation, fixed quantity periodical transportation to periodically transport a designated commodity so as to stock a determined quantity thereof, etc. It is preferable that the delivery company is instructed to perform user support in accordance with such information. No problem essentially occurs in processing the current system, if a processing order, except for steps S3, S4 (except for consolidation), S5, and S6, is changed for an already registered user, for example.

No problem essentially occurs in processing the current system, if a processing order, except for steps S2, S3 (except for consolidation), S6, and 37, is changed for an already registered user, for example. Further, Fig. 1 illustrates by premising that the payment amount changing device 15 executes a changing process after an order reception process is executed by an instruction from the order reception processing device 13. However, a changing process for changing a buying-in price can be executed when user purchase information included in the user information DB is changed. Further, a payment amount for an order accepted commodity and support can be set to decrease after an order acceptance process (e.g. after a prescribed number of times or time period of the order acceptance processes).

According to the current system, the payment amount changing device can change in a payment amount for a commodity and the change can be clearly notified by a user with a brochure. Further, due to preparation of various purchasing manners such as facsimile, telephone, electronic mail, etc, a user can purchase a commodity and support by its preferable purchasing manner.

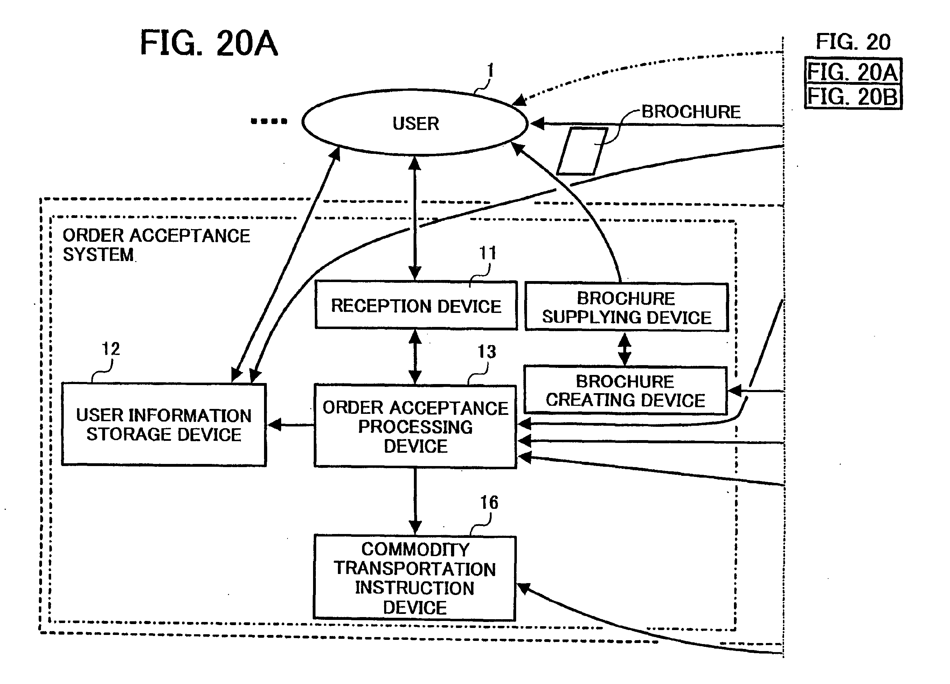

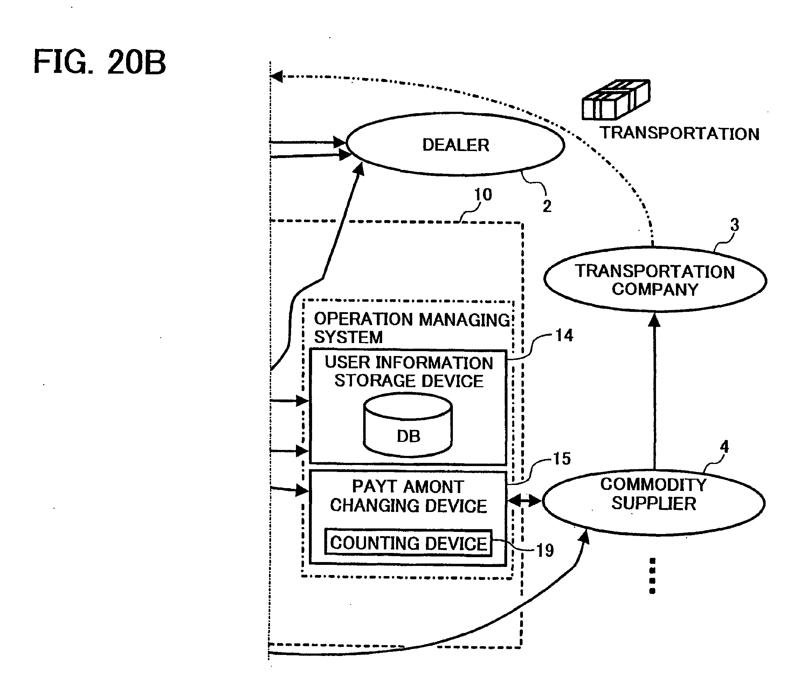

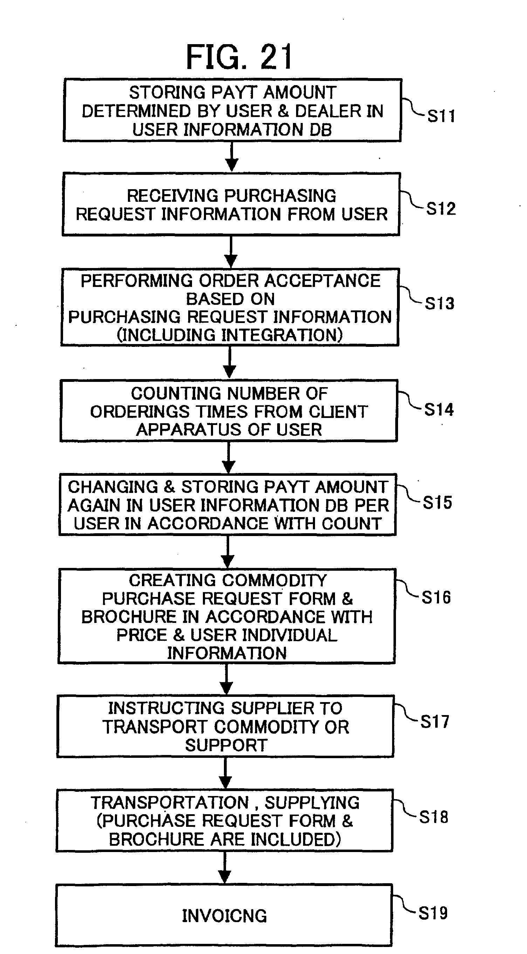

Fig. 20 is a chart illustrating a configuration of a commodity order acceptance and transportation system of another embodiment according to the present invention. Fig. 21 is a flowchart illustrating a method of the commodity order acceptance and transportation system of Fig. 20. A commodity order acceptance and transportation system 10 (herein after referred to as a current system) of still another embodiment of the present invention includes a counting device 19 for counting a number of events serving as a reference for changing in a payment amount in the payment amount changing device 15 included in the above described systems with reference to Figs. 18 and 19. The events are a number of ordering for each payment amount (commodity and support) from a user. The counting device 19 counts a number of ordering from a user per a commodity and support, or regardless thereof. Then, the payment amount is changed and stored again in the user information DB in accordance with the number counted by the counting device 19 (in step S15). The count of the counting device 19 can be weighted in accordance with a payment amount for a commodity and support. Steps S11 to S13 of Fig. 21 are similar to those S1 to S3 of Fig. 19. Also, steps S16 to S19 of Fig. 21 are similar to those S5 to S8 of Fig. 19. Thus, these similar steps are omitted to describe.

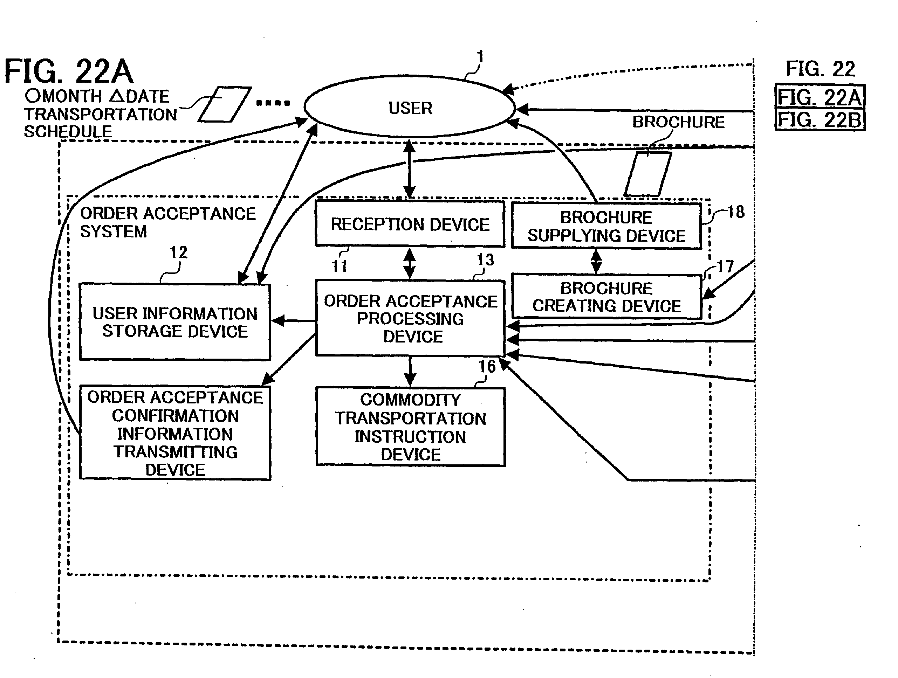

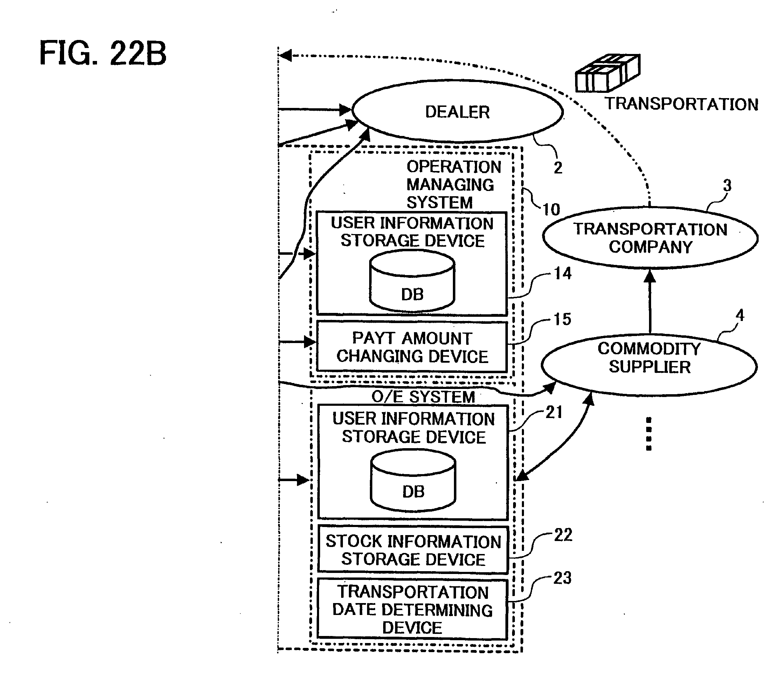

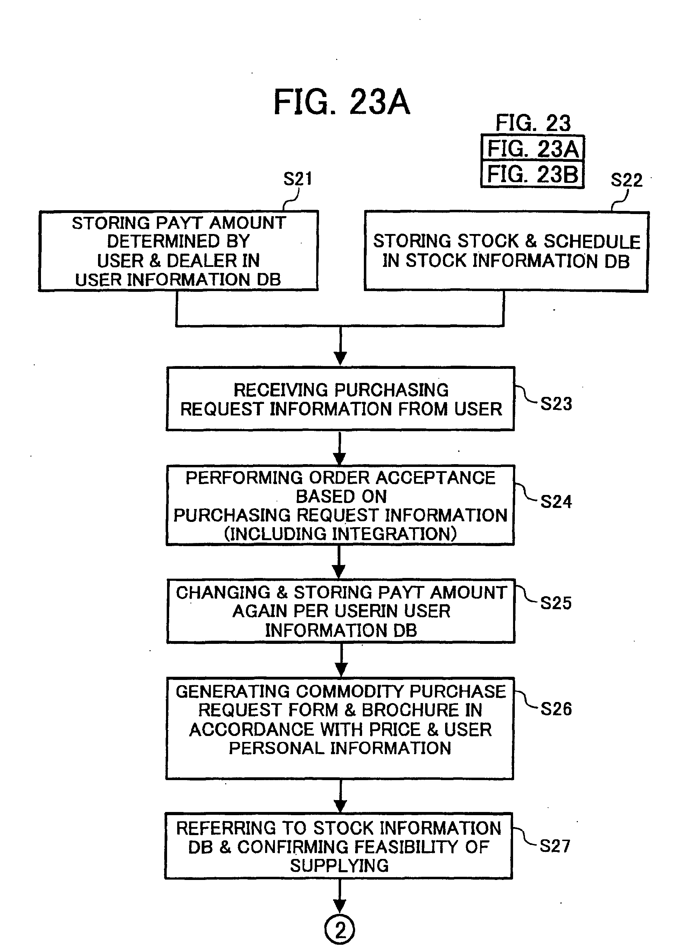

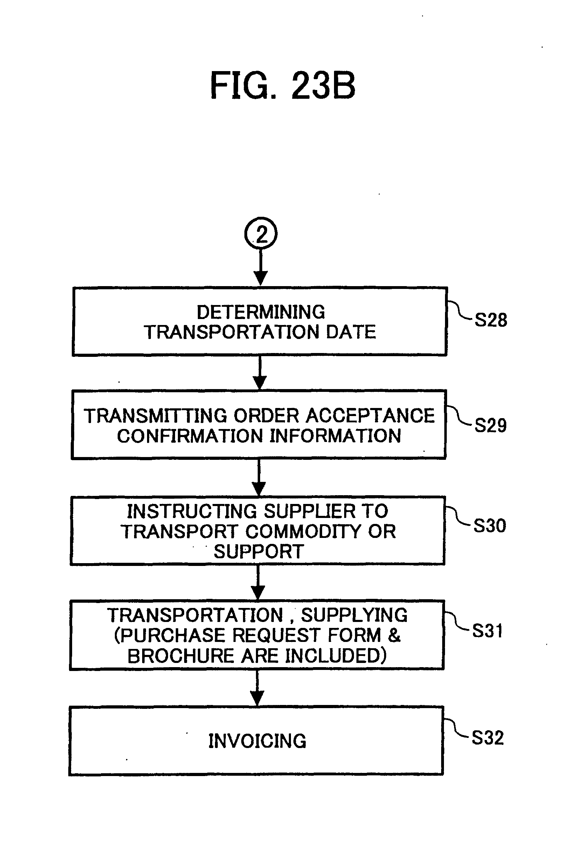

Fig. 22 is a chart illustrating a configuration of a commodity order acceptance and transportation system of still another embodiment of the present invention. Fig. 23 is a flowchart illustrating a method for order accepting and transporting of a commodity in the system of Fig. 22. A commodity order acceptance and transportation system 10 (hereinafter referred to as a current system) of the still another embodiment is a system capable of also providing a commodity and support of an own company (administrator) in the above-described entire embodiments.
Specifically, one of the providers 4 is premised as a trader 4' administrating the current system 10. The current system further includes an inventory information storage device 21, inventory confirmation device 22, transportation date determining device 23, and order acceptance confirmation information transmitting device 24. For the sake of convenience, the order acceptance confirmation information transmitting device 24 is described as a device included in the order acceptance system. Each of devices 21, 22 and 23 is described as a device included in an order entry system (O/E system) . Further, steps S21, S23, S24, S25, S26, S30, S31 and S32 of Fig. 23 are similar to those S1, S2, S3, S4, S5, S6, S7 and S8 of Fig. 19. Thus, similar description is omitted.

In the O/E system, the inventory information storage device 21 stores commodity inventory information and/or schedule information related to support personnel (in step S22). Practically, inventory information and schedule information are preferably stored in the inventory information DB. The inventory confirmation device 22 confirms if commodity and/or support ordered can be provided based upon the information (included in the inventory information DB) stored in the inventory information storage device 21 (in step S27). This confirmation process is preferably executed after or before an order acceptance process in step S35. The transportation date determining device 23 determines a transportation date of a commodity included in the purchase request information in accordance with inventory confirmation result obtained by the inventory confirmation device 22 and the purchase request information (in step S27). The order acceptance confirmation information transmitting device 24 automatically transmits the transportation date determined by the transportation date determining device 23 together with the purchase request information as order acceptance confirmation to a user by a facsimile or electronic mail (in step S28). The commodity transportation instruction device 16 instructs to transport a commodity on the transportation date determined by the transportation date determining device 23 (in step S30).

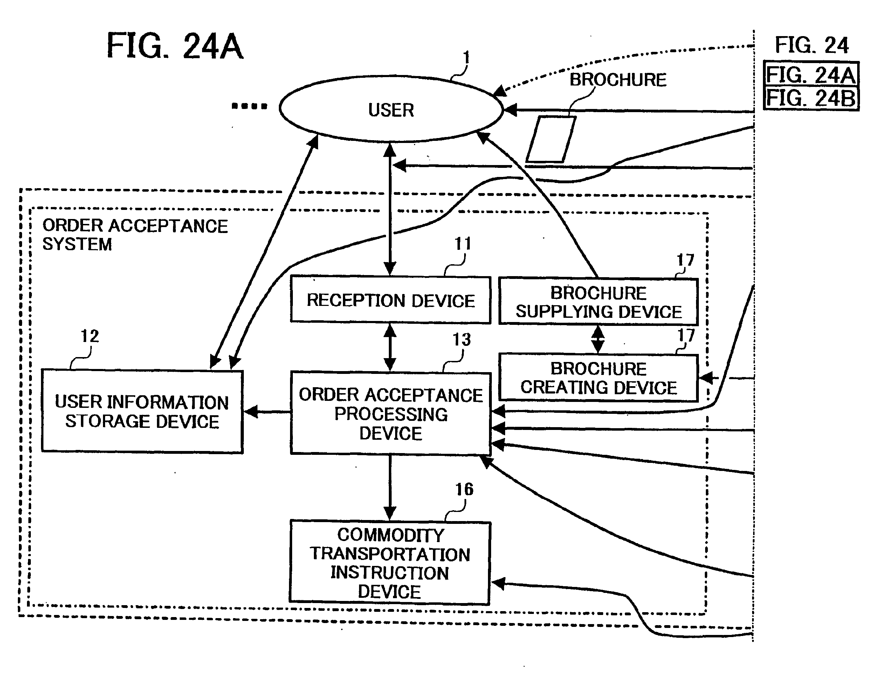

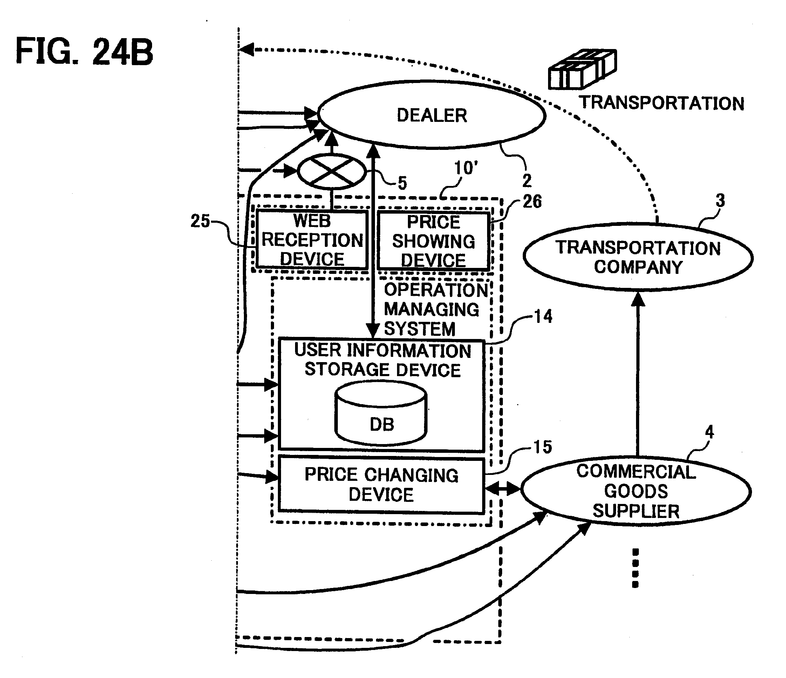

Fig. 24 is a chart illustrating a configuration of commodity order acceptance and transportation system of still another embodiment of the present invention.

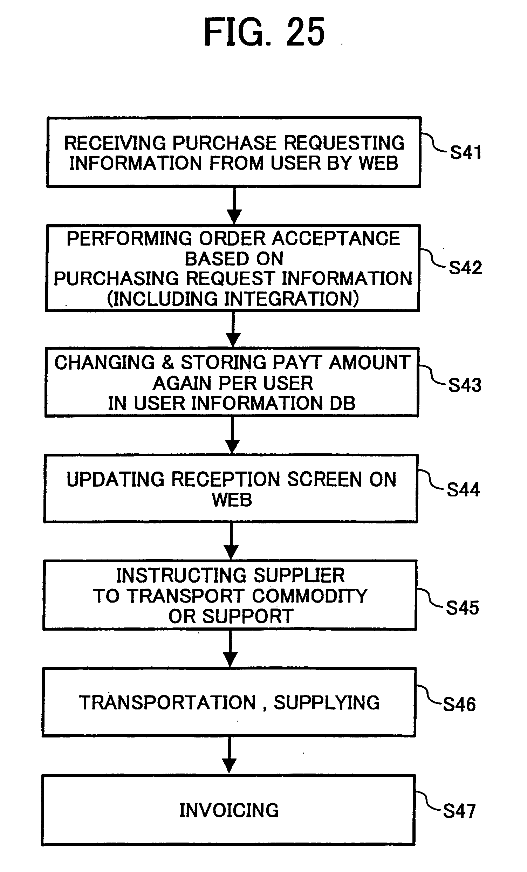

Fig. 25 is a flowchart illustrating a method for order accepting and transporting a commodity in the system of Fig. 24. Stillanother embodiment of the commodity order acceptance and transportation system 10' (hereinafter referred to as a current system) is a system that enables to purchase a commodity and support using a Web via Internet in the above-described entire embodiments. Namely, the current system 10' includes a Web reception device (a network reception device) 25 that receives user information and buying-in request information having commodity order acceptance information and/or support request information, which are transmitted from a user 1 (practically, a client apparatus such as PC of the user) to a Web server via Internet. Differences from the above-described various embodiments are as follows:

First, the order acceptance processing device 13 consolidates purchase request information received by the reception device 11 and Web reception device 25. The user information storage device 14 stores payment amounts determined by a user and dealer 2 for commodity and support which are received by the reception device 11 together with personal information of the user. In addition, the user information storage device 14 stores payment amounts determined by a user and dealer 2 for commodity and support which are received by the Web reception device 25 together with personal information of the user. Further, the invoicing device 12 preferably previously settles what received by the Web reception device 25 on the network. This embodiment exemplifies a system integrating and processing both receptions by the reception and Web reception devices 11 and 25. However, a system only receiving by the Web reception device 25 can be employed.
In a reception process by the Web reception device 25, purchase request information from a user 1 is received by the Web (in step S41). Various purchase request information received by the Web reception device 25 are consolidated and are subjected to an order acceptance process by the order acceptance processing device 13 in accordance with the purchase request information (in step S42). A payment amount stored in the user information storage device 14 is changed and stored again by the payment amount changing device 15 per a user 1 (in step S43). Then, a reception screen provided per a user on the Web is updated by the payment amount offering device 26 so as to be enabled to offer to a user (in step S44). Details of the reception screen are described later with reference to Fig. 9. The commodity transportation instruction device 16 refers to storage information stored in the user information storage device 14 in accordance with an order acceptance process performed by the order acceptance processing device 13, and instructs to transport a commodity or provide support included in the purchase request information (in step S45). In accordance with the instruction, transportation of the commodity and provision of the support are executed (in step S46). In this situation, when there exits a reception by the reception device 11, a brochure or the like is occasionally transported. Invoicing of step S47 is similarly performed to that of step S8 of Fig. 2.

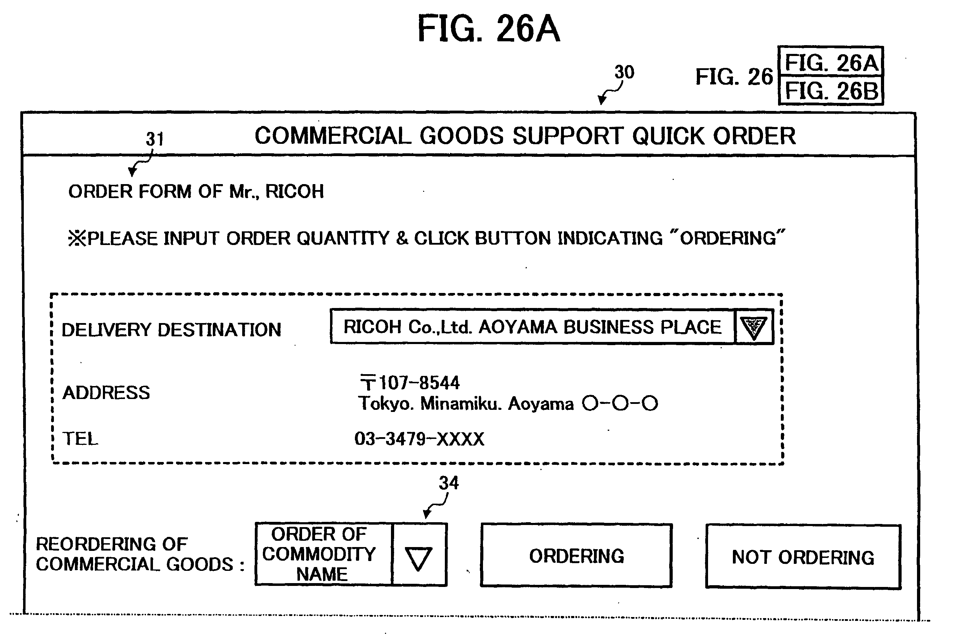

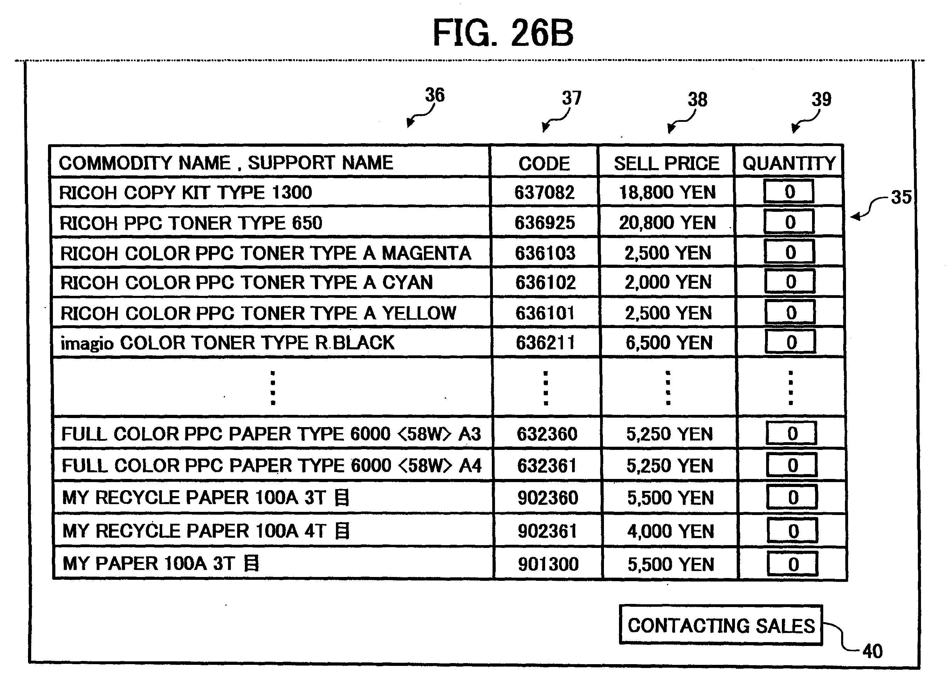

Fig. 26 is a chart illustrating a payment amount offering device included in the system of Fig. 24, and showing a display example of a commodity support quick order site in the Web. The payment amount offering device 26 offers a purchase request form including payment amount information to applicable user in accordance with a payment amount and personal information each stored in the user information DB. In Fig. 26, numeral number 30 denotes a screen of a private use site for the user 1. As illustrated on a user name display section 31, a private use screen for Mr. Ricoh is exemplified. Subsequent to a screen of a home page as a default, the screen 30 is reached via a user ID (and password) input screen or the like . In the user name display section 31, delivery destination display section displaying the user name, address display section 33 displaying address and telephone number therefor, respective default values are displayed with reference to the user information DB. In this example, as a delivery destination, a default value is displayed, and a pull-down menu is provided so as to enable to readily select another delivery destinations. Thus, an address of a selected delivery destination is displayed on the address display section 33. Further, as to an offering manner of a payment amount as a feature of the present invention, a purchase request form 35 clearly indicating a private use commodity and support name 36 for Mr. Ricoh, it's code number 37, amount of payment 38, and number of request quantity 39 are indicated. Order acceptance is performed when Mr. Ricoh inputs a purchase number in commodity columns 39 for a purchase commodity and support, and clicks an order button. In addition, when order is difficult to be executed on Internet due to an expensive commodity, and being unclear of a standard or the like of a commodity only from description of the home page, it is enabled to click a button and request a sales person to visit.

The mechanisms and processes set forth in the present invention may be implemented using one or more conventional general purpose microprocessors and/or signal processors programmed according to the teachings in the present specification as will be appreciated by those skilled in the relevant arts. Appropriate software coding can readily be prepared by skilled programmers based on the teachings of the present disclosure, as will also be apparent to those skilled in the relevant arts. However, as will be readily apparent to those skilled in the art, the present invention also may be implemented by the preparation of application-specific integrated circuits by interconnecting an appropriate network of conventional component circuits or by a combination thereof with one or more conventional general purpose microprocessors and/or signal processors programmed accordingly. The present invention thus also includes a computer-based product which may be hosted on a storage medium and include, but is not limited to, any type of disk including floppy disks, optical disks, CD-ROMs, magnet-optical disks, ROMs, RAMs, EPROMs, EFPROMs, flash memory, magnetic or optical cards, or any type of media suitable for storing electronic instructions.

Numerous additional modifications and variations of the present invention are possible in light of the above teachings. It is therefore to be understood that within the scope of the appended claims, the present invention may be practiced otherwise than as specifically described herein.

## Claims

1. A commodity order acceptance and transportation system, comprising:
a reception device configured to receive purchase request information including user information, commodity ordering information and/or support requesting information, said commodity ordering information transmitted from any one of facsimile, telephone, and electronic mail;
an order acceptance processing device configured to consolidate purchase request information received by the reception device and process an accepted order in accordance with the purchase request information;
a buying-in information storage device configured to store a buying-in price of a commodity and support bought-in from a provider thereof;
a user information storage device configured to store an amount of payment for a commodity and support determined by a user and a dealer together with personal information of a user;
a commodity transportation instructing device configured to refer to information stored in the buying-in information storage device and user information storage device in accordance with an order reception process performed by the order acceptance processing device, said commodity transportation instructing device instructing the provider to transport a commodity or provide support included in the purchase request information; and
an invoicing device configured to invoice payments for the commodity and/or support included in the purchase request information to the user and/or dealer in accordance with the amounts of payment for the commodity and/or support stored in the user information storage device and the personal information of the user.

2. A commodity order acceptance and transportation system, comprising:
a reception device configured to receive purchase request information including user information, commodity ordering information and/or support requesting information, said commodity ordering information transmitted from any one of facsimile, telephone, and electronic mail;
a Web reception device configured to receive purchase request information including user information, commodity ordering information, and/or support request information, said purchase request information being transmitted from a user to a Web server via Internet;
an order acceptance processing device configured to consolidate purchase request information received by the reception device and Web reception device and perform an order acceptance process in accordance with the purchase request information;
a buying-in information storage device configured to store a buying-in price of a commodity and support bought-in from a provider thereof;
a user information storage device configured to store amount of payments for a commodity and/or support received by the reception device together with personal information of a user, said amount of payments being determined by a user and dealer, said user information storage device storing amount of payments for a commodity and/or support received by the Web reception device together with personal information of a user, said amount of payments being determined by a user and dealer;
a commodity transportation instructing device configured to refer to information stored in the buying-in information storage device and user information storage device in accordance with the order acceptance process, said a commodity transportation instructing device instructing the provider to transport a commodity or provide support included in the purchase request information; and
an invoicing device configured to invoice payments for the commodity and/or support included in the purchase request information to the user and/or dealer in accordance with the amounts of payment for the commodity and/or support stored in the user information storage device and the personal information of the user.

3. The commodity order acceptance and transportation system according to any one of claims 1 and 2 , further comprising a buying-in price changing device configured to change a buying-in price of a commodity and/or support stored in the buying-in information storage device in accordance with a result of compiling payment amounts for the commodities and/or supports stored in the user information storage device.

4. The commodity order acceptance and transportation system according to any one of claims 1 and 2 , further comprising a buying-in price changing device configured to change a buying-in price of a commodity and/or support stored in the buying-in information storage device in accordance with a number of items of the commodity and/or a frequency of support stored in the user information storage device.

5. The commodity order acceptance and transportation system according to any one of claims 1 and 2, further comprising a buying-in price changing device configured to change a buying-in price of a commodity and/or support stored in the buying-in information storage device in accordance with an amount of payment for a commodity and/or support per a user.

6. The commodity order acceptance and transportation system according to any one of claims 1 and 2 , further comprisingabuying-in price notifying device configured to notify a buying-in price changed by the buying-in price changing device, said buying-in price notifying device being included in a terminal apparatus of the provider, said terminal apparatus being connected to the commodity order acceptance and transportation system via a network.

7. The commodity order acceptance and transportation system according to any one of claims 3 and 5, further comprising a buying-in price confirmation device configured to allow to confirm a change in a buying-in price, said buying-in price confirmation device being included in a terminal apparatus of the provider, said terminal apparatus being connected to the commodity order acceptance and transportation system via a network.

8. The commodity order acceptance and transportation system according to any one of claims 1 to 7, further comprising a buying-in price confirmation device configured to quote and allow to confirm a buying-in price stored in the buying-in information storage device, said buying-in price confirmation device being included in a terminal apparatus of the provider, said terminal apparatus being connected to the commodity order acceptance and transportation system via a network.

9. The commodity order acceptance and transportation system according to any one of claims 1 to 8, wherein one of providers administrates the commodity order acceptance and transportation system, and said commodity order acceptance and transportation system further including:
an inventory information storage device configured to store inventory information related to a commodity and/or schedule information related to support manpower;
an inventory confirmation device configured to confirm a feasibility of provision of an ordered commodity and/or support in accordance with the information stored in the inventory information storage device;
a transportation date determining device configured to determine a transportation date of a commodity included in the purchase request information in accordance with a result of the confirmation of inventory and the purchase request information; and
an order acceptance confirmation information transmitting device configured to automatically transmit the transportation date determined by the purchase request information and the transportation date determining device to a user as order acceptance acknowledge using a facsimile or electronic mail;
wherein said commodity transportation instruction device instructs to transport the commodity on the date.

10. The commodity order acceptance and transportation system according to any one of claims 1 to 9, wherein said amount of payment stored in the user information storage device is set to a commodity and/or support highly frequently purchased per a user.

11. The commodity order acceptance and transportation system according to any one of claims 1 to 10, further comprising:
a brochure creating device configured to create a purchase requesting form and brochure in accordance with an amount of payment and personal information stored in the user information storage device; and
a brochure providing device configured to provide the purchase requesting form and brochure to a user.

12. A commodity order acceptance and transportation system, comprising:
a reception device configured to receive purchase request information including user information, commodity ordering information and/or support requesting information, said commodity ordering information being transmitted from any one of facsimile, telephone, and electronic mail;
an order acceptance processing device configured to consolidate purchase request information received by the reception device and perform an order acceptance process in accordance with the purchase request information;
a user information storage device configured to store an amount of payment determined by a user and a dealer for a commodity and/or support together with personal information of a user;
a payment amount changing device configured to change and store again the amount of payment stored in the user information storage device per a user;
a brochure creating device configured to create a purchase requesting form and/or brochure of a commodity in accordance with an amount of payment and personal information stored in the user information storage device;
a brochure providing device configured to provide the purchase requesting form and brochure to a user.
a commodity transportation instructing device configured to refer to information stored in the user information storage device in accordance with an order acceptance process performed by the order acceptance processing device and instruct to transport a commodity or provide support included in the purchase request information; and
an invoicing device configured to invoice payments for the commodity and/or support included in the purchase request information to the user and/or dealer in accordance with the amounts of payment for the commodity and support stored in the user information storage device and the personal information of the user.

13. A commodity order acceptance and transportation system, comprising:
a Web reception device configured to receive purchase request information including user information, commodity ordering information, and/or support request information, said purchase request information being transmitted from a user to a Web server via Internet;
an order acceptance processing device configured to consolidate purchase request information received by the Web reception device and perform an order acceptance process in accordance with the purchase request information;
a user information storage device configured to store amounts of payment for commodities and/or supports, whose order being received by the Web reception device, together with personal information of a user;
a payment amount changing device configured to change and store again the amount of payment stored by the user information storage device per the user;
a payment amount offering device configured to offer a purchase request form including payment amount information to a user in accordance with the amount of payment and user personal information stored in the user information storage device;
a commodity transportation instructing device configured to refer to information stored in the user information storage device in accordance with an order acceptance process and instruct to transport a commodity or provide support included in the purchase request information; and
an invoicing device configured to invoice payments for the commodity and/or support included in the purchase request information to the user and/or dealer in accordance with the amounts of payment for the commodity and/or support stored in the user information storage device and the personal information of the user.

14. A commodity order acceptance and transportation system, comprising:
a reception device configured to receive purchase request information including user information, commodity ordering information and/or support requesting information, said commodity ordering information being transmitted from any one of facsimile, telephone, and electronic mail;
a Web reception device configured to receive purchase request information including user information, commodity ordering information, and/or support request information, said purchase request information being transmitted from a user to a Web server via Internet;
an order acceptance processing device configured to consolidate purchase request information received by the reception device and the Web reception device and perform an order acceptance process in accordance with the purchase request information;
a user information storage device configured to store amounts of payment determined by a user and a dealer for commodities and/or supports, whose order being received by the reception device, together with personal information of a user, and said user information storage device storing amounts of payment determined by a user and a dealer for commodities and supports, whose order being received by the Web reception device, together with personal information or a user;
a payment amount changing device configured to change and store again the amount of payment stored by the user information storage device per a user;
a payment amount offering device configured to offer a purchase request form including the payment amount information to a user in accordance with the amount of payment and user personal information stored in the user information storage device;
a brochure creating device configured to create a purchase requesting form and brochure in accordance with an amount of payment and personal information stored in the user information storage device;
a brochure providing device configured to provide the purchase requesting form and brochure to a user.
a commodity transportation instructing device configured to refer to information stored in the user information storage device in accordance with an order acceptance process performed by the order acceptance processing device and instruct to transport a commodity or provide support included in the purchase request information; and
an invoicing device configured to invoice payments for the commodity and/or support included in the purchase request information to the user and/or dealer in accordance with the amounts of payment for the commodity and support stored in the user information storage device and the personal information of the user.

15. The commodity order acceptance and transportation system, according to claim 14, wherein said payment amounts of the commodity and/or support, whose order being received by the reception device, are substantially the same to those received by the Web reception device.

16. The commodity order acceptance and transportation system, according to any one of claims 12 to 15, said payment amount changing device includes a discounting and storing device configured to discount and store the payment amount for the commodity and/or support in accordance with a frequency of orders of commodity or support.

17. The commodity order acceptance and transportation system, according to any one of claims 12 to 15, said payment amount changing device includes a discounting and storing device configured to discount by a prescribed rate and store the payment amount for the commodity and/or support in accordance with a frequency of orders of commodity or support

18. The commodity order acceptance and transportation system, according to any one of claims 12 to 16, an inventory information storage device configured to store inventory information related to commodity and/or schedule information related to support manpower;
an inventory confirmation device configured to confirm a feasibility of provision of an ordered commodity and or support in accordance with the inventory information;
a transportation date determining device configured to determine a transportation date of a commodity included in the purchase request information in accordance with a result of confirmation of inventory by the inventory confirmation device and the purchase request information; and
an order acceptance confirmation information transmitting device configured to automatically transmit the transportation date determined by the purchase request information and the transportation date determining device to a user as order acceptance acknowledge using a facsimile or an electronic mail;
wherein said commodity transportation instruction device instructs to transport the commodity on the date.

19. A program executing, when read by a computer, functions of the commodity order acceptance and transportation system as claimed in any one of claims 1 to 18.

20. A computer readable recording medium storing the program as claimed in claim 19.
